(19) Europäisches Patentamt / European Patent Office / Office européen des brevets

(11) **EP 4 312 543 B1**

(12) **EUROPEAN PATENT SPECIFICATION**

(45) Date of publication and mention
of the grant of the patent:
**18.02.2026 Bulletin 2026/08**

(21) Application number: **22717389.5**

(22) Date of filing: **24.03.2022**

(51) International Patent Classification (IPC):
*A01N 37/02* (2006.01)    *A01N 33/12* (2006.01)
*A01P 3/00* (2006.01)    *A01P 13/00* (2006.01)

(52) Cooperative Patent Classification (CPC):
(C-Sets available)
**A01N 37/02; A01P 3/00**    (Cont.)

(86) International application number:
**PCT/EP2022/057720**

(87) International publication number:
**WO 2022/200477 (29.09.2022 Gazette 2022/39)**

(54) **METHODS FOR IMPROVING RICE YIELD AND TREATING BLAST DISEASE, SHEATH BLIGHT DISEASE, OR A COMBINATION THEREOF ON A RICE PLANT**

VERFAHREN ZUR BEHANDLUNG DER REISBRÄUNEKRANKHEIT, REISSCHEIDENFÄULE ODER EINER KOMBINATION DAVON AUF EINER REISPFLANZE

PROCÉDÉS DE TRAITEMENT DE LA COULURE, DU FLÉTRISSEMENT DE LA GAINE OU LEUR COMBINAISON SUR UN PLANT DE RIZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2021 EP 21165023**

(43) Date of publication of application:
**07.02.2024 Bulletin 2024/06**

(73) Proprietor: **BIPA NV**
**1840 Londerzeel (BE)**

(72) Inventors:
• **DE SAEGHER, Johan**
  **9070 Destelbergen (BE)**
• **NESLER, Andrea**
  **38057 Pergine Valsugana (IT)**
• **VERMAETE, Ann**
  **9220 Hamme (BE)**
• **GOOSSENS, Jonas**
  **1785 Merchtem (BE)**
• **KAIAFA, Maria**
  **1000 Brussels (BE)**

(74) Representative: **De Clercq & Partners**
**Edgard Gevaertdreef 10a**
**9830 Sint-Martens-Latem (BE)**

(56) References cited:
**WO-A1-03/059063    WO-A1-2020/104645**

• **MARIJA PETKOVIC ET AL: "Novel biocompatible cholinium-based ionic liquids-toxicity and biodegradability", GREEN CHEMISTRY, vol. 12, no. 4, 1 January 2010 (2010-01-01), GB, pages 643, XP055545694, ISSN: 1463-9262, DOI: 10.1039/b922247b**

(52) Cooperative Patent Classification (CPC): (Cont.)

C-Sets
**A01N 37/02, A01N 33/12**

**Description**

**FIELD OF THE INVENTION**

The invention is broadly in the field of agriculture, more precisely in the field of crop protection of rice. In particular, the invention concerns a method for preventing or controlling blast disease, sheath blight, or a combination thereof on a rice plant or a part thereof. Further, the invention relates to a method for increasing the rice yield of a rice plant relative to the rice yield of an untreated rice plant.

**BACKGROUND OF THE INVENTION**

Rice is the staple food crop for a large part of the human population in the world today. Rice blast disease suffered by rice crops, which is caused by *Pyricularia oryzae* fungus, is one of the most crucial factors that hinders the production of rice in the areas around the globe where rice crops are cultivated. Rice blast disease that attacks rice crops may result in the loss of rice yield as much as 61% or as equal as 3.65 tons per hectare (Suganda et al., Jurnal Agrikultura, 2016, 27 (3): 154-159). The rice blast disease could attack rice on every part of the plant, including the leaves, midribs, neck, panicles, and rice grains, which may cause crop failure.
The symptoms of rice blast disease on the rice crops are varied, and depend on the crops' resistance level. In the case of more vulnerable plants, spots will appear which are damp and greenish grey with dark green colour on the edges. Whereas on the more resistant varieties, the spots are small in size which is around 1-2 mm and brown or dark brown.
One of the other severe diseases in rice is sheath blight, which is caused by *Rhizoctonia solani.* Sheath blight disease has been reported to cut harvest by 20-35% in several countries that produce the world's rice (Inagaki, Scl. Rep. Fac. Agric. Meljo Univ., 2001, 37: 57-66). *Rhizoctonia solani* fungal infection can affect the amount of filled grain on every panicle, the length of the panicle, and the percentage of grain filling. The first symptom is greenish-grey spots that develop on the midrib of leaves near a water surface. The spots are elliptical or oval, 1 cm long, spans 2-3 cm, and stick together. The border of the spots and the variation in colour gives a clear pattern on the infected parts of the plant. In a humid condition, the fungal mycelium can appear white, and the fungus forms irregular sclerotia. With optimal humidity, leaf blades that come in contact with nearby infected stems can become infected as well. These symptoms are usually apparent during the ripening phase and can be found on the leaves of rice.
Suggestions to control blast disease and sheath blight disease include the usage of resistant varieties, balanced fertilization, fungicides, and cultural practices. The most predominant control method is that of using resistant variety plants. However, fungi such as *Pyricularia oryzae* are proven to be able to adapt in a rapid manner, so that it could disrupt the resistance established by the resistant varieties. Thus, the control through the use of fungicide is still the most reliable method. Nevertheless, the perpetual usage of fungicide could also trigger the occurrence of resistant strains.
In view of the above-mentioned matters, there remains a need in the art for further and/or improved methods to control blast disease and sheath blight disease on rice plants.
WO 2020/104645 concerns the use of a composition comprising a choline salt of a C8-C10 fatty acid as a fungicide on a plant or plant part. The C8-C10 fatty acids, such as caprylic acid, pelargonic acid or capric acid, are described as having satisfactory fungicidal activity on plants with strongly reduced or even without phytotoxic effects when formulated as the choline salt of the fatty acid, despite the commonly known use of such fatty acids as a contact herbicide. WO 2020/104645 is not concerned with the prevention or control of blast disease or sheath blight disease on rice plants.
WO 03/059063 relates to agricultural compositions that find particular use as a fungicide composition. The fungicide composition can include one or more fatty acids and one or more organic acids different from the fatty acid.

**SUMMARY OF THE INVENTION**

The present inventors have found that choline pelargonate can be used as an effective fungicide against blast disease and/or sheath blight on a rice plant or part thereof. The present inventors found that the results obtained with choline pelargonate against blast disease on rice plants were unexpectedly superior to those obtained against blast disease on other crops such as barley.
Hence, the present invention provides subject-matter as set forth in any one and all of the appended claims 1 to 16.
Accordingly, a first aspect of the invention relates to a method for preventing or controlling blast disease, sheath blight, or a combination thereof on a rice plant or a part thereof, the method comprising applying choline pelargonate or a composition comprising choline pelargonate to the rice plant, part thereof, or locus of growth of the rice plant, wherein the application of choline pelargonate or the composition to the rice plant, part thereof, or locus of growth of the rice plant is performed after the manifestation of symptoms of blast disease, sheath blight, or combination thereof on the rice plant or part thereof.

By extensive experimental testing, the inventors have found that the efficacy level of the use of choline pelargonate is similar or even superior to the efficacy level of the use of commercially available reference products (e.g., Nordox 56 WP, Allied Botanical Corporation, Philippines for preventive treatment of blast disease; Antracol 70 WP, Bayer CropScience for preventive treatment of sheath blight; or Amistar Top 325 SC, Syngenta Bangladesh for curative treatment of blast disease or sheath blight). Advantageously, the present use of choline pelargonate against blast disease, sheath blight, or a combination thereof on a rice plant or part thereof results in reduced losses of rice and increased rice yields, even outperforming those obtained after use of commercially available reference products.

Accordingly, a further aspect of the invention relates to a method for increasing the rice yield of a rice plant relative to the rice yield of an untreated rice plant, the method comprising applying choline pelargonate or a composition comprising choline pelargonate to the rice plant, part thereof, or locus of growth of the rice plant, wherein the application of choline pelargonate or the composition to the rice plant, part thereof, or locus of growth of the rice plant is performed after the manifestation of symptoms of blast disease, sheath blight, or combination thereof on the rice plant or part thereof. A related aspect provides the use of choline pelargonate or a composition comprising choline pelargonate for increasing the rice yield of a rice plant relative to the rice yield of an untreated rice plant, wherein choline pelargonate or the composition is applied to the rice plant, part thereof, or locus of growth of the rice plant after the manifestation of symptoms of blast disease, sheath blight, or combination thereof on the rice plant or part thereof. As shown in the example section, the yield of rice plants treated with a composition comprising choline pelargonate according to an embodiment of the invention outperformed the yield of untreated rice plants and of rice plants treated with commercially available reference products, while the composition caused no phytotoxicity on the rice plants or parts thereof.

Moreover, the present inventors have found that the highest efficacy levels against blast disease, sheath blight, or a combination thereof, and the highest rice yields are obtained upon preventive treatment with choline pelargonate, i.e. when choline pelargonate is applied to the rice plant or part thereof prior to the manifestation of symptoms of blast disease, sheath blight, or a combination thereof.

Hence, provided herein but not according to the claimed invention is a method for preventing or controlling blast disease, sheath blight, or a combination thereof on a rice plant or a part thereof, the method comprising applying choline pelargonate or a composition comprising choline pelargonate to the rice plant, part thereof, or locus of growth of the rice plant before the manifestation of symptoms of the blast disease, sheath blight, or combination thereof on the rice plant or part thereof.

In addition, the inventors have unexpectedly found that choline pelargonate (e.g. at concentrations causing no phytotoxicity) provides a complete stop-effect on the development of blast disease and sheath bight on rice plants upon curative treatment. This finding is surprising given that the main control methods of blast disease and sheath blight involves the use of systemic fungicides, while pelargonic acid typically is known to function as a contact (i.e. non-systemic) herbicide. Choline pelargonate would thus not be expected to function as a systemic fungicide for curative disease control.

Accordingly, the present invention provides a method for preventing or controlling blast disease, sheath blight, or a combination thereof on a rice plant or a part thereof, the method comprising applying choline pelargonate or a composition comprising choline pelargonate to the rice plant, part thereof, or locus of growth of the rice plant after the manifestation of symptoms of the blast disease, sheath blight, or combination thereof on the rice plant or part thereof; preferably before the intensity of the symptoms of the blast disease, sheath blight, or combination thereof is at most 25%.

Furthermore, the use of choline pelargonate against blast disease, sheath blight, or a combination thereof on a rice plant or part thereof causes no phytotoxicity on the rice plant or part thereof.

A further aspect relates to the use of choline pelargonate or a composition comprising choline pelargonate in the prevention or control of blast disease, sheath blight, or combination thereof on a rice plant or part thereof, wherein choline pelargonate or the composition is applied to the rice plant, part thereof, or locus of growth of the rice plant after the manifestation of symptoms of blast disease, sheath blight, or combination thereof on the rice plant or part thereof.

The above and further aspects and preferred embodiments of the invention are described in the following sections and in the appended claims. The subject-matter of appended claims is hereby specifically incorporated in this specification.


## DETAILED DESCRIPTION OF THE INVENTION

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms also encompass "consisting of" and "consisting essentially of".

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of and from the specified value, in particular variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

Whereas the term "one or more", such as one or more members of a group of members, is clear per se, by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

All documents cited in the present specification are hereby incorporated by reference in their entirety.

Unless otherwise specified, all terms used in disclosing the invention, including technical and scientific terms, have the meaning as commonly understood by one of ordinary skill in the art to which this invention belongs. By means of further guidance, term definitions may be included to better appreciate the teaching of the present invention.

By extensive experiment testing, the present inventors have found that choline pelargonate can be used as an effective fungicide, both for preventive and curative disease control, against blast disease, sheath blight, or a combination thereof on a rice plant or part thereof.

Accordingly, a first aspect of the invention relates to a method of treatment of blast disease, sheath blight, or a combination thereof on a rice plant or a part thereof, the method comprising applying choline pelargonate or a composition comprising choline pelargonate to the rice plant, part thereof, or locus of growth of the rice plant, wherein the application of choline pelargonate or the composition to the rice plant, part thereof, or locus of growth of the rice plant is performed after the manifestation of symptoms of the blast disease, sheath blight, or combination thereof on the rice plant or part thereof. Preferably, the method is an agricultural method.

The term "agricultural" as used herein refers to the activity or business of growing crops including rice.

As used throughout this specification, the term "treatment" refers to the alleviation or measurable reduction of one or more measurable symptoms or markers of a disease such as blast disease, sheath blight, or a combination thereof. Measurable reduction includes any statistically significant decline in a measurable symptom or marker. Generally, the term encompasses both curative treatments and treatments directed to reduce symptoms and/or slow progression of the disease. The terms encompass both the curative treatment of an already developed disease, as well as prophylactic or preventative measures or treatment, wherein the aim is to prevent or lessen the chances of incidence of a disease. Herein, the treatment is a curative treatment. In other embodiments not according to the claimed invention, the treatment may be a preventative treatment. The present inventors have surprisingly found that application of choline pelargonate suppressed the development of blast disease, sheath blight, or a combination thereof with a high efficacy level (e.g. at dosages causing no phytotoxicity), and allowed to increase rice yields, even outperforming the rice yields obtained after preventive and curative treatment by commercially available reference products.

The terms "preventive treatment", "protective treatment" or "protectant treatment" as used herein refer to preventing or lessening the chances of incidence of blast disease, sheath blight disease, or combination thereof, such as to prevent occurrence, development and progression of blast disease, sheath blight disease, or combination thereof.

The term "curative treatment" as used herein refers to treating of an already developed blast disease, sheath blight disease, or combination thereof, such as reducing, stabilizing, suppressing, and curing an already developed blast disease, sheath blight disease, or combination thereof.

The phrases "preventing or controlling blast disease, sheath blight, or a combination thereof" and "treating blast disease, sheath blight, or a combination thereof" may be used interchangeably herein, and encompass both the actual treatment of an already developed blast disease, sheath blight disease, or combination thereof, such as reducing, stabilizing, suppressing, and curing an already developed blast disease, sheath blight disease, or combination thereof, as well as prophylactic or preventive measures, wherein the aim is to prevent or lessen the chances of incidence of blast disease, sheath blight disease, or combination thereof, such as to prevent occurrence, development and progression of blast disease, sheath blight disease, or combination thereof.

The terms "blast disease", "rice blast", "rice blast disease", or "blight disease" may be used interchangeably herein and refer to a disease on rice plants caused by *Pyricularia oryzae*.

*Pyricularia oryzae,* also known as rice blast fungus, rice rotten neck, rice seedling blight, blast of rice, oval leaf spot of graminea, pitting disease, ryegrass blast, Johnson spot, and neck blast is a plant pathogenic fungus that causes blast disease affecting rice and cereals including wheat, rye, barley, and pearl millet. *Pyricularia oryzae* is also referred to as *Magnaporthe grisea, Pyricularia grisea, Ceratosphaeria grisea, Dactylaria grisea, Dactylaria oryzae, Phragmoporthe grisea,* or *Trichothecium griseum.* The names *Pyricularia grisea* and *Magnaporthe grisea* are most used for this pathogen and relate to different stages of the pathogen life cycle: *Pyricularia grisea* is the anamorph and *Magnaporthe grisea* is the teleomorph.

The symptoms of blast disease include lesions that can be found on all above-ground parts of the plant, including leaves, leaf collars, necks, panicles, pedicels, and seeds, as well as on the roots. Preferably, the symptoms of blast disease include lesions on the leaves. Initial symptoms are white to grey-green lesions or spots with darker borders produced on all parts of the shoot, while older lesions are elliptical or spindle-shaped and whitish to grey with necrotic borders. Lesions may enlarge and coalesce to kill the entire leaf. Blast disease also prevents maturation of the actual grain.

Generally, it is possible to identify (determine) in each rice area a rice a development stage range (i.e. BBCH range) in which the symptoms of blast disease start to appear. This BBCH range corresponds to the timing of the fungicide treatments. Further, development stage ranges (i.e. BBCH range) in which the symptoms of blast disease worsen or increase may be determined. These BBCH ranges correspond to the timing of further fungicide treatments. For instance, in Italy the treatments are focused on BBCH ranges: 37-43; 49-53; 61-67. However, the appearance of the symptoms may be different (earlier or later) according to the climatic conditions favourable for the disease development and host plant attack. In embodiments, the symptoms of sheath blight on rice appear from BBCH 21 to BBCH 53, such as from BBCH 30 to BBCH 53, e.g. from BBCH 30 or later, such as from BBCH 31, from BBCH 32, from BBCH 33, from BBCH 34, from BBCH 35, from BBCH 36 or later. In embodiments, the symptoms of sheath blight on rice appear from BBCH 37 to BBCH 43, such as from BBCH 37 or later, such as from BBCH 38, from BBCH 39, from BBCH 40, from BBCH 41, from BBCH 42, or from BBCH 43. In embodiments, the symptoms of sheath blight on rice appear from BBCH 49 to BBCH 53. In embodiments, the symptoms of sheath blight on rice appear from BBCH 61 to BBCH 67.

The terms "sheath blight", "rice sheath blight", "sheath blight disease" or "rice sheath blight disease" may be used interchangeably herein and refer to a disease on rice plants caused by *Rhizoctonia solani.*

*Rhizoctonia solani* is a plant pathogenic fungus with a wide host range. *Rhizoctonia solani* is also referred to as *Moniliopsis aderholdii, Moniliopsis solani, Rhizoctonia grisea, Rhizoctonia napaeae.*

The symptoms of sheath blight include circular or oblong lesions, usually green-grey and water-soaked, on the lower leaves. The first symptom is greenish-grey spots that develop on the midrib of leaves near a water surface. The spots are elliptical or oval, 1 cm long, spans 2-3 cm, and stick together. The border of the spots and the variation in colour gives a clear pattern on the infected parts of the plant. In a humid condition, the fungal mycelium can appear white, and the fungus forms irregular sclerotia. With optimal humidity, leaf blades that come in contact with nearby infected stems can become infected as well.

In embodiments, the symptoms of sheath blight on rice start to appear during the late tillering to joint elongation stages (BBCH 25-35) of plant growth and become more aggressive as the rice plant shifts to the panicle differentiation (reproductive) stage (BBCH >51). In embodiments, the symptoms of sheath blight on rice appear from BBCH 25 to BBCH 35, such as from BBCH 25 or later such as from BBCH 26, from BBCH 27, from BBCH 28, from BBCH 29, or from BBCH 30 or later, such as from BBCH 31, from BBCH 32, from BBCH 33, from BBCH 34 or from BBCH 35.

As mentioned above, blast disease is caused by the fungus *Pyricularia oryzae,* sheath blight is caused by the fungus *Rhizoctonia solani.*

Accordingly, an embodiment relates to a method for preventing or combatting a fungal infection on a rice plant or a part thereof, wherein the fungal infection is *Pyricularia oryzae, Rhizoctonia solani,* or a combination thereof, the method comprising applying choline pelargonate or a composition comprising choline pelargonate to the rice plant, part thereof, or locus of growth of the rice plant.

The phrases "preventing or combating a fungal infection" and "treating a fungal infection" may be used interchangeably herein, and encompass both the actual treatment of an already developed fungal infection, such as reducing, controlling, stabilizing, and suppressing an already developed fungal infection, as well as prophylactic or preventive measures, wherein the aim is to prevent or lessen the chances of incidence of a fungal infection, such as to prevent occurrence, development and progression of a fungal infection.

The terms "fungal infection" or "fungal disease" may be used interchangeably herein.

In embodiments of the methods or uses, as taught herein, the fungal infection is a fungal infection naturally occurring on rice plants such as *Rhizoctonia solani, Pyricularia oryzae,* or a combination thereof.

The terms "rice plant", "rice producing plant" or "rice producing crop" refers to a plant which is capable of producing rice.

The phrase "part of a rice plant" as used herein refers to any one or more of the leaves, the stems, the roots, the panicles, and the seeds of the rice plant. The leaves, the stems and the roots are the vegetative organs. The panicles and the seeds are the reproductive organs. Reference to the "leaf" may include the leaf blade, the leaf collar and the leaf sheath. Reference to the "panicle" may include the pedicels (which carry the spikelets) and flowers. The terms "seed", "grain" or "paddy" can be used interchangeably herein and refer to the rice grain composed of the rice envelope, the endosperm and the embryo.

In embodiments, the part of a rice plant may be any one or more of the leaves (including the leaf blade, the leaf collar and the leaf sheath), the stems, the panicles (including the pedicels and the flowers), the seeds, and the roots. In embodiments, the part of a rice plant may be any one or more of the leaves, the stems, the panicles, and the seeds. In embodiments, the part of a rice plant may be any one or more of the leaves and the stems.

In embodiments, the leaves, the stems, the panicles, the seeds, and the roots of the rice plant, when treated according to the methods as taught herein, may be attached to (e.g. growing on) the rice plant. Post-harvest methods of treating the seeds (grains) are not included in the methods as taught herein.

The phrases "locus of a rice plant" or "locus of growth of a rice plant" as used herein refer to an area in close proximity of a rice plant. For instance, the locus of a rice plant may be a circular area around the stem of a rice plant such as a circular area having a diameter of at most 1 meter, for instance at most 50 centimetres (cm), at most 40 cm, at most 30 cm, at most 20 cm, at most 10 cm, or at most 5 cm, around the stem of a rice plant.

The term "rice" as used herein refers to the seed of the rice plant.

Rice plants as used herein refer to the grass species of the genera *Oryza, Zizania* and *Porteresia*. The term encompasses food crop rice plants (including the major food crop rice species *Oryza sativa and Oryza glaberrima*) and wild rice plants including the species *Porteresia coarctata* and four species of grasses forming the genus *Zizania*.

In embodiments of the methods or uses as taught herein, the rice plant may be selected from the group consisting of *Oryza sativa* (Asian rice), *Oryza glaberrima* (African rice), *Oryza australiensis, Oryza barthii, Oryza brachyantha, Oryza coarctata, Oryza eichingeri, Oryza grandiglumis, Oryza latifolia, Oryza longiglumis, Oryza longistaminata, Oryza meyeriana, Oryza minuta, Oryza neocaledonica, Oryza officinalis, Oryza punctata, Oryza ridleyi, Oryza rufipogon, Oryza schlechteri, Zizania palustris, Zizania aquatica, Zizania texana, Zizania latifolia,* and *Porteresia coarctata*.

In embodiments of the methods or uses as taught herein, the rice plant may be selected from the group consisting of *Oryza sativa* (Asian rice), *Oryza glaberrima* (African rice), *Oryza australiensis, Oryza barthii, Oryza brachyantha, Oryza coarctata, Oryza eichingeri, Oryza grandiglumis, Oryza latifolia, Oryza longiglumis, Oryza longistaminata, Oryza meyeriana, Oryza minuta, Oryza neocaledonica, Oryza officinalis, Oryza punctata, Oryza ridleyi, Oryza rufipogon,* and *Oryza schlechteri.*

In embodiments of the methods or uses as taught herein, the rice plant may be *Oryza sativa.* In embodiments of the methods or uses as taught herein, the rice plant may be *Oryza sativa indica* or *Oryza sativa japonica.*

In embodiments, the methods as taught herein comprise applying (i.e. administering, delivering, providing, putting on) choline pelargonate or a composition comprising choline pelargonate to the rice plant, part thereof, or locus of growth of the rice plant.

The terms "choline pelargonate", "choline nonanoate" or "trimethylethanolamine pelargonate" can be used interchangeably and refer to the choline salt of pelargonic acid. At the concentrations described herein, choline pelargonate appears to have no unacceptable toxic or hazardous effects on humans, non-target organisms or the environment; for instance when sprayed on the rice plant. Additionally, as shown in the experimental section, the application of a composition comprising choline pelargonate against sheath blight or blast disease on rice plants (both with preventive and curative treatment regimen) at all tested dosages does not cause phytotoxicity symptoms on the rice plants.

The term "pelargonic acid" as used herein can also be referred to as "nonanoic acid" or "1-octanecarboxylic acid" or a C9 fatty acid, and refers to an organic compound composed of a nine-carbon chain terminating in a carboxylic acid functional group.

Choline pelargonate may be applied herein as part of a composition, in particular an antifungal composition, such as an aqueous composition comprising choline pelargonate.

The terms "composition", "formulation", or "preparation" may be used interchangeably herein and refer to a mixture comprising choline pelargonate as an active ingredient and one or more auxiliaries.

The terms "active ingredient" or "active component" can be used interchangeably and broadly refer to a compound or substance which, when provided in an effective amount, achieves a desired outcome. Typically, an active ingredient as intended herein may achieve such outcome(s) through interacting with and/or modulating with the rice plant, part hereof, or locus of the rice plant.

In embodiments of the methods or uses as taught herein, the composition may be an aqueous composition or a liquid. In embodiments of the methods or uses as taught herein, the composition may comprise between 0.001% (w/v) and 70% (w/v) of choline pelargonate. Typically, the composition comprising choline pelargonate may be a liquid or aqueous composition comprising between 0.001% (w/v) to 70% (w/v) of choline pelargonate. For instance, the composition comprising choline pelargonate may be a liquid or aqueous composition comprising between 0.005% (w/v) and 65% (w/v), between 0.01% (w/v) and 60% (w/v), between 0.05% (w/v) and 55% (w/v), or between 0.1% (w/v) and 50% (w/v) of choline pelargonate.

The compositions as taught herein may comprise ready-to-use compositions which can be applied with suitable apparatus to the plant, but also concentrates or concentrated formulations which have to be diluted with water prior to use. In embodiments of the methods or uses as taught herein, the composition may be a sprayable liquid or a concentrate.

In embodiments, the composition as taught herein may be formulated in a ready-to-use format, such as a spray or sprayable liquid, or a dip, comprising a non-phytotoxic amount of choline pelargonate which upon administration is effective to inhibit the growth of *Rhizoctonia solani* and/or *Pyricularia oryzae* on the rice plant or part hereof.

In embodiments of the methods or uses as taught herein, the composition may be a spray, sprayable liquid or a dip. Preferably, choline pelargonate is present in the composition as taught herein in an effective amount.

In embodiments of the methods or uses as taught herein, the composition as taught herein may be an aqueous composition, in particular a sprayable liquid or a dip, comprising between 0.001% (w/v) and 5.0% (w/v) of choline pelargonate, preferably between 0.001% (w/v) and 2.0% (w/v) of choline pelargonate, such as between 0.001% (w/v) and 1.50% (w/v) or between 0.001% (w/v) and 1.0% (w/v) of choline pelargonate. In embodiments, the composition as taught herein may be an aqueous composition, in particular a sprayable liquid or a dip, comprising between 0.001% (w/v) and 4.0% (w/v), between 0.001% (w/v) and 3.5% (w/v), between 0.01% (w/v) and 3.0% (w/v), between 0.01% (w/v) and 2.5% (w/v), or between 0.05% (w/v) and 2.0% (w/v) of choline pelargonate, such as between 0.1% (w/v) and 2.5% (w/v), between 0.1% (w/v) and 2.0% (w/v) or between 0.1% (w/v) and 1.0% (w/v) of choline pelargonate. For instance, the composition as taught herein may be an aqueous composition, in particular a sprayable liquid or a dip, comprising between 0.1% (w/v) and 0.8% (w/v), between 0.2% (w/v) and 0.8% (w/v), between 0.3% (w/v) and 0.8% (w/v), or between 0.4% (w/v) and 0.8% (w/v) of choline pelargonate. Such concentrations advantageously allow effective treatment of blast disease, sheath blight, or combination thereof on the rice plant or part thereof. Such concentrations also reduce rice losses and increases rice yield as compared to no treatment or treatment with commercially available reference products.

In embodiments of the methods or uses as taught herein, the composition may be a concentrate.

In embodiments of the methods or uses as taught herein, the composition may be a concentrate comprising between 5.0% (w/v) and 70% (w/v) of choline pelargonate, preferably between 10% (w/v) and 60% (w/v) or between 10% (w/v) and 50% (w/v) of choline pelargonate. For instance, the composition may be a concentrate comprising between 15% (w/v) and 55% (w/v), between 20% (w/v) and 50% (w/v), between 25% (w/v) and 45% (w/v), between 30% (w/v) and 40% (w/v), or between 30% (w/v) and 35% (w/v) of choline pelargonate.

Advantageously, choline pelargonate is a stable compound which can be easily concentrated, stored, and diluted before use. This allows the production of a concentrated composition comprising choline pelargonate, which can then easily be diluted, for instance with water, to obtain a composition with a concentration of choline pelargonate which is effective to inhibit the growth of one or more phytopathogenic fungi on a rice plant or part thereof without phytotoxic effects. The availability of a concentrated composition allows for additional benefits in production ease, transport and storage costs. It is understood that the ready-to-use antifungal compositions as taught herein comprise an active but non-phytotoxic amount of choline pelargonate. "Active but non-phytotoxic amount" shall mean an amount of choline pelargonate which is sufficient to control or to kill the undesirable fungi, which amount at the same time does not exhibit noteworthy symptoms of phytotoxicity.

In embodiments, the composition may be formulated as a powder. In embodiments of the methods or uses as taught herein, the composition may be a solid or powdered composition.

The term "powder" refers to a dry, bulk solid composed of many very fine particles that may flow freely when shaken or tilted.

In embodiments of the methods or uses as taught herein, the composition as taught herein may be a solid or powdered composition comprising from 70% (w/w) to 100% (w/w) of choline pelargonate. In embodiments, the composition as taught herein may be a solid or powdered composition comprising from 75% (w/w) to 100% (w/w), from 80% (w/w) to 100% (w/w), from 90% (w/w) to 100% (w/w), or from 95% (w/w) to 99% (w/w) of choline pelargonate. In embodiments, the composition as taught herein may comprise at least 70% (w/w), at least 80% (w/w), at least 90% (w/w/), at least 95% (w/w) or up to 100% (w/w) of choline pelargonate, particularly when formulated as a powder.

In embodiments of the methods or uses as taught herein, the composition may further comprise one or more auxiliaries or auxiliary agents such as a solvent, a carrier, a surfactant, a sticker (e.g. an additive or adjuvant to improve adhesive properties of the composition to the plant or part thereof), an antifreeze agent, a thickener, a buffering agent, an antifoaming agent, an antioxidant, a preservative, an aroma, or a colorant.

Suitable auxiliary agents and inert agents are known in the art and are commercially available. In general, the active compound (i.e. choline pelargonate) can be combined with any solid or liquid additive customarily used for formulation purposes. A carrier is to be understood as meaning a natural or synthetic, organic or inorganic substance which is mixed or combined with the active compounds for better applicability, in particular for application to plants or plant parts. The carrier, which may be solid or liquid, is generally inert and should be suitable for use in agriculture. For instance, liquid carriers may include water, organic solvents, and mineral oils and vegetable oils. Suitable liquefied gaseous extenders or carriers are liquids which are gaseous at ambient temperature and under atmospheric pressure, for example aerosol propellants, such as butane, propane, nitrogen and carbon dioxide. Suitable surfactants are emulsifiers, dispersants or wetting agents having ionic or nonionic properties, or mixtures of these surfactants. It is possible to use colorants such as inorganic pigments, for example iron oxide, titanium oxide, Prussian blue, and organic dyes, such as alizarin dyes, azo dyes and metal phthalocyanine dyes, and trace nutrients, such as salts of iron, manganese, boron, copper, cobalt, molybdenum and zinc. Stabilizers, such as low-temperature stabilizers, preservatives, antioxidants, light stabilizers or other agents which improve chemical and/or physical stability may also be present. The composition may further comprise other crop protection agents and/or pesticidal agents.

Examples of typical compositions comprising choline pelargonate include water-soluble liquids (SL), emulsifiable concentrates (EC), emulsions in water (EW), suspension concentrates (SC, SE, FS, OD), water-dispersible granules (WG), granules (GR) and capsule concentrates (CS), as known in the art.

In embodiments, choline pelargonate or a composition comprising choline pelargonate may be applied to the rice plant, part thereof, or to the locus of growth of the rice plant.

In embodiments, choline pelargonate or a composition comprising choline pelargonate may be applied to the rice plant, part of the rice plant, or to the locus of growth of the rice plant, present on a field.

The terms "field" or "agricultural field" may be used interchangeably herein and refer to an area of land used for agricultural purposes such as cultivating crops or cultivating rice plants.

In embodiments, choline pelargonate or the composition as taught herein may be applied to the part of the rice plant, such as to a leaf, when the part of the rice plant, such as the leaf, is present on or attached to (e.g. is growing on) the rice plant.

In embodiments, choline pelargonate or the composition as taught herein may be applied to any one or more of the leaves, the stems, the panicles, the seeds, and the roots. In embodiments, the method may comprise applying choline pelargonate or the composition to the whole of the above-ground part of the rice plant. In certain embodiments of the methods or uses as taught herein, choline pelargonate or the composition as taught herein may be applied to (e.g., sprayed on) the whole of the above-ground part of the rice plant. Accordingly, in embodiments, choline pelargonate or the composition as taught herein may be applied to (e.g., sprayed on) any one or more of the leaves, the stems, the panicles, and the seeds of the rice plant. In embodiments, choline pelargonate or the composition as taught herein may be applied to (e.g., sprayed on) any one or more of the leaves and the stems of the rice plant. In embodiments, choline pelargonate or the composition as taught herein may be applied to (e.g., sprayed on) the leaves of the rice plant.

Hence, an embodiment provides a method for preventing or controlling blast disease, sheath blight, or a combination thereof on a rice plant or a part thereof, the method comprising applying choline pelargonate or a composition comprising choline pelargonate to the leaves, the leaf collars, the necks, and the stems of the rice plant.

In embodiments of the methods or uses as taught herein, choline pelargonate or the composition as taught herein may be sprayed on the rice plant, part thereof, or locus of growth of the rice plant. In embodiments, sprayable liquids may be applied by spraying the rice plant, part thereof, or locus of growth of the rice plant by conventional spraying equipment as known in the art, such as airplanes, backpack sprayers, tractor mounted boom sprayers etc.

In embodiments, application of choline pelargonate or the composition as taught herein to the rice plant, part thereof, or locus of growth of the rice plant may be carried out directly or by action on their surroundings or habitat using customary treatment methods, for example by dipping, spraying, atomizing, irrigating, evaporating, dusting, fogging, broadcasting, foaming, painting, spreading-on, watering (drenching) or drip irrigating. In embodiments, the method may comprise spraying, sprinkling, showering, spritzing, spreading in droplets, spattering; dispersing, diffusing, or douching the rice plant, part thereof, or locus of growth of the rice plant with choline pelargonate or the composition as taught herein.

In embodiments, the application may be single application or frequent (multiple) applications, at the same or varying time intervals. In embodiments, the application may be performed at least once, at least two times, at least three times, at least four times, at least five times, or at least six times. Preferably, the application may be performed at least five times. Such a treatment regimen advantageously results in effective treatment of the blast disease, sheath blight, or combination thereof on the rice plant or part thereof. Such a treatment regimen also reduces rice losses and increases rice yield as compared to no treatment or treatment with commercially available reference products.

The time interval between two subsequent applications may be from three days to four weeks (one month). For instance, the time interval between two subsequent applications may be from four days to three weeks, from five days to two weeks, or from six days to ten days. The time interval between two subsequent applications may be at least four days, at least five days, at least six days, at least seven days (one week), at least eight days, at least nine days, at least ten days, or at least two weeks. Preferably, the time interval between two subsequent applications may be at least one week. Preferably, the application may be performed at least two times, such as at least three times, at least four times or at least five times, and the time interval between two subsequent applications may be at least one week. Such a treatment regimen advantageously results in effective treatment of the blast disease, sheath blight, or combination thereof on the rice plant or part thereof. Such a treatment regimen also reduces rice losses and increases rice yield as compared to no treatment or treatment with commercially available reference products.

In the methods as taught herein, the timing of the application of choline pelargonate or the composition as taught herein is after ("curative application") the manifestation of the fungal disease, in particular blast disease or sheath blight, or the symptoms thereof.

In embodiments of the methods as taught herein not according to the claimed invention, the application of choline pelargonate or the composition to the rice plant, part thereof, or locus of growth of the rice plant may be performed before the manifestation (or appearance, occurrence) of the blast disease, sheath blight, or combination thereof on the rice plant or part thereof. In embodiments not according to the claimed invention, the application of choline pelargonate or the composition to the rice plant, part thereof, or locus of growth of the rice plant may be performed before the manifestation (or appearance, occurrence) of symptoms of the blast disease, sheath blight, or combination thereof on the rice plant or part thereof. In embodiments not according to the claimed invention, the method may comprise a preventive application of choline pelargonate or the composition as taught herein. In embodiments not according to the claimed invention, the method may comprise a preventive treatment regimen of choline pelargonate or the composition as taught herein. The preventive application or preventive treatment regimen with choline pelargonate (e.g. at dosages causing no phytotoxicity) advantageously results in a high efficacy of treatment of the blast disease, sheath blight, or a combination thereof and increased rice yields, even outperforming the efficacy and rice yields obtained after preventive or curative treatment by commercially available reference products and after curative treatment by choline pelargonate.

The term "preventive application" as used herein refers to an application of choline pelargonate or the composition as taught herein to the rice plant, part thereof, or locus of growth of the rice plant before the manifestation (or appearance, occurrence) of the blast disease, sheath blight, or combination thereof or the manifestation (or appearance, occurrence) of symptoms of the blast disease, sheath blight, or combination thereof on the rice plant or part thereof.

The term "preventive treatment regimen" as used herein refers to a treatment regimen wherein the applications are preventive applications as defined herein.

In embodiments not according to the claimed invention, the timing of the first application of choline pelargonate or the composition as taught herein to the rice plant, part thereof, or locus of growth of the rice plant may be before the manifestation (or appearance, occurrence) of the blast disease, sheath blight, or combination thereof or the manifestation (or appearance, occurrence) of symptoms of the blast disease, sheath blight, or combination thereof on the rice plant or part thereof. In embodiments not according to the claimed invention, when more than one application is performed, the subsequent application(s) of choline pelargonate or the composition as taught herein to the rice plant, part thereof, or locus of growth of the rice plant are also performed before the manifestation (or appearance, occurrence) of the blast disease, sheath blight, or combination thereof or the manifestation (or appearance, occurrence) of symptoms of the blast disease, sheath blight, or combination thereof on the rice plant or part thereof.

The application of choline pelargonate or the composition to the rice plant, part thereof, or locus of growth of the rice plant is performed after the manifestation of the blast disease, sheath blight, or combination thereof on the rice plant or part thereof. The application of choline pelargonate or the composition to the rice plant, part thereof, or locus of growth of the rice plant is performed after the manifestation of symptoms of the blast disease, sheath blight, or combination thereof on the rice plant or part thereof. The method comprises a curative application of choline pelargonate or the composition as taught herein. The method comprises a curative treatment regimen of choline pelargonate or the composition as taught herein. The curative application or curative treatment regimen unexpectedly results in a high efficacy of treatment of the blast disease, sheath blight, or a combination thereof and increased rice yields, despite the commonly known use of pelargonic acid as a contact herbicide. The curative application or curative treatment regimen with choline pelargonate (e.g. at dosages causing no phytotoxicity) advantageously outperforms the efficacy and rice yields obtained after curative treatment by commercially available reference products.

The term "curative application" as used herein refers to an application of choline pelargonate or the composition as taught herein to the rice plant, part thereof, or locus of growth of the rice plant after the manifestation (or appearance, occurrence) of the blast disease, sheath blight, or combination thereof or the manifestation (or appearance, occurrence) of symptoms of the blast disease, sheath blight, or combination thereof on the rice plant or part thereof.

The term "curative treatment regimen" as used herein refers to a treatment regimen wherein the applications are curative applications as defined herein.

In embodiments, the first application of choline pelargonate or the composition as taught herein to the rice plant, part thereof, or locus of growth of the rice plant may be performed after the manifestation of symptoms of the blast disease, sheath blight, or combination thereof on the rice plant or part thereof, and before the intensity of the symptoms of the blast disease, sheath blight, or combination thereof is at most 25%. In embodiments, the first application of choline pelargonate or the composition as taught herein to the rice plant, part thereof, or locus of growth of the rice plant may be performed after the manifestation of symptoms of the blast disease, sheath blight, or combination thereof on the rice plant or part thereof, and before the intensity of the symptoms of the blast disease, sheath blight, or combination thereof is at most 20%, at most 15%, at most 10%, or at most 5%. For example, the first application of choline pelargonate or the composition as taught herein to the rice plant, part thereof, or locus of growth of the rice plant may be performed after the manifestation of symptoms of the blast disease, sheath blight, or combination thereof on the rice plant or part thereof, and before the intensity of the symptoms of the blast disease, sheath blight, or combination thereof is at most 4%, at most 3%, at most 2%, or at most 1%. Such curative application or curative treatment regimen with choline pelargonate (e.g. at dosages causing no phytotoxicity) results in a high efficacy of treatment of the blast disease, sheath blight, or a combination thereof and improved rice yields outperforming the efficacy and rice yields obtained after curative treatment by commercially available reference products.

In embodiments, the first application of choline pelargonate or the composition as taught herein to the rice plant, part thereof, or locus of growth of the rice plant may be performed on the same day after the manifestation of the first symptoms of the blast disease, sheath blight, or combination thereof on the rice plant or part thereof. In embodiments, the first application of choline pelargonate or the composition as taught herein to the rice plant, part thereof, or locus of growth of the rice plant may be performed 1 day to 14 days (2 week), such as 1 day to 7 days (1 week), 1 day to 4 days, 1 day to 3 days, or 1 day to 2 days, after the manifestation of the first symptoms of the blast disease, sheath blight, or combination thereof on the rice plant or part thereof. In embodiments, a second or further application of choline pelargonate or the composition as taught herein to the rice plant, part thereof, or locus of growth of the rice plant may be performed 7 days (1 week) after the previous application. In embodiments, a second or further application of choline pelargonate or the composition as taught herein to the rice plant, part thereof, or locus of growth of the rice plant may be performed 1 week to 4 weeks, such as 1 week to 3 weeks or 1 week to 2 weeks, after the previous application. In embodiments, the first application of choline pelargonate or the composition as taught herein to the rice plant, part thereof, or locus of growth of the rice plant may be performed on the same day after the manifestation of the first symptoms of the blast disease, sheath blight, or combination thereof on the rice plant or part thereof, and the second application of choline pelargonate or the composition as taught herein to the rice plant, part thereof, or locus of growth of the rice plant may be performed 7 days (1 week) after the first application.

In embodiments, the method may comprise a curative application or curative treatment regimen of choline pelargonate or the composition as taught herein, wherein the intensity of the symptoms of the blast disease, sheath blight, or combination thereof at the first application is at most 25%, at most 20%, at most 15%, at most 10%, or at most 5%. In embodiments, the method may comprise a curative application or curative treatment regimen of choline pelargonate or the composition as taught herein wherein the intensity of the symptoms of the blast disease, sheath blight, or combination thereof at the first application is at most 4.5%, at most 4%, at most 3.5%, at most 3%, at most 2.5%, at most 2%, at most 1.5%, or at most 1%.

In embodiments, the timing of the first application of choline pelargonate or the composition as taught herein to the rice plant, part thereof, or locus of growth of the rice plant may be after the manifestation (or appearance, occurrence) of symptoms of the blast disease, sheath blight, or combination thereof on the rice plant or part thereof, preferably before the intensity of the symptoms is at most 25%, at most 20%, at most 15%, at most 10%, or at most 5%. In embodiments, when more than one application is performed, the subsequent application(s) of choline pelargonate or the composition as taught herein to the rice plant, part thereof, or locus of growth of the rice plant are performed after the manifestation (or appearance, occurrence) of symptoms of the blast disease, sheath blight, or combination thereof on the rice plant or part thereof, preferably before or after the intensity of the symptoms is at most 25%, at most 20%, at most 15%, at most 10%, or at most 5%.

The timing of the manifestation of blast disease, sheath blight, or combination thereof or of symptoms of the blast disease, sheath blight, or combination thereof depends on many different factors and conditions, including the species of the rice plant, the variety of the rice plant, the weather conditions, etc. Based on experience, the farmer will know or will be able to determine (e.g. predict) the timing of the manifestation of blast disease, sheath blight, or combination thereof or of symptoms of the blast disease, sheath blight, or combination thereof based on the prevailing factors and conditions. The determination (e.g. prediction) of the timing of the fungal disease may be based on the use of a decision support system (DSS), for example used in Europe and the United States. The DSS combines climatic data with data related to spores detector in the fields to predict the probability of the pathogen attack. According to the prediction of the risk, the farmer can apply choline pelargonate or the composition as taught herein.

Generally, in embodiments, the method may comprise applying choline pelargonate or the composition as taught herein (e.g. for the first time) to the rice plant, part thereof, or locus of growth of the rice plant on day 15 to day 100, day 15 to day 90, day 15 to day 80, day 15 to day 75, or day 15 to day 70 after sowing of the rice seeds. Preferably, the method may comprise applying choline pelargonate or the composition (e.g. for the first time) to the rice plant, part thereof, or locus of growth of the rice plant on day 20 to day 65 after sowing of the rice seeds.

In embodiments not according to the claimed invention, the preventive application may be performed by applying choline pelargonate or the composition as taught herein (e.g. for the first time) to the rice plant, part thereof, or locus of growth of the rice plant on day 15 to day 30 after sowing of the rice seeds. In embodiments not according to the claimed invention, the preventive application may be performed by applying choline pelargonate or the composition as taught herein (e.g. for the first time) to the rice plant, part thereof, or locus of growth of the rice plant on day 20 to day 30 after sowing of the rice seeds.

In embodiments, the curative application may be performed by applying choline pelargonate or the composition as taught herein (e.g. for the first time) to the rice plant, part thereof, or locus of growth of the rice plant on day 31 to day 100, day 31 to day 90, day 31 to day 80, day 31 to day 75, or day 31 to day 70 after sowing of the rice seeds. In embodiments, the curative application may be performed by applying choline pelargonate or the composition as taught herein (e.g. for the first time) to the rice plant, part thereof, or locus of growth of the rice plant on day 31 to day 65, on day 31 to day 55, or on day 31 to day 45 after sowing of the rice seeds. In embodiments, the curative application may be performed by applying choline pelargonate or the composition as taught herein (e.g. for the first time) to the rice plant, part thereof, or locus of growth of the rice plant on day 35 to day 80, on day 40 to day 75, or on day 45 to day 70 after sowing of the rice seeds.

In embodiments, the method as taught herein comprises applying choline pelargonate or a composition comprising choline pelargonate to the rice plant, part thereof, or locus of growth of the rice plant in an amount effective to prevent or control the blast disease, sheath blight, or combination thereof on the rice plant or part thereof. In embodiments, the method as taught herein comprises applying choline pelargonate or a composition comprising choline pelargonate to the rice plant, part thereof, or locus of growth of the rice plant in an amount effective to prevent or combat the fungal infection by *Rhizoctonia solani* and/or *Pyricularia oryzae* on the rice plant or part thereof.

In embodiments, the composition comprising choline pelargonate may be applied at a concentration of 0.1 L/ha to 10 L/ha to the rice plant, part thereof, or locus of growth of the rice plant. In embodiments, the composition comprising choline pelargonate may be applied at a concentration of 0.5L/ha to 10L/ha, 1 L/ha to 10 L/ha, 2 L/ha to 8 L/ha, or 2L/ha to 6L/ha to the rice plant, part thereof, or locus of growth of the rice plant. Preferably, choline pelargonate or the composition as taught herein is applied at a concentration of 3 L/ha to 7L/ha, such as 4 L/ha to 6 L/ha, to the rice plant, part thereof, or locus of growth of the rice plant. Such dosages advantageously allow more effective treatment of the blast disease, sheath blight, or combination thereof on the rice plant or part thereof when compared with a commercially available reference product.

In embodiments, choline pelargonate may be applied at a concentration of at least 0.01 kg/ha to the rice plant, part thereof, or locus of growth of the rice plant. In embodiments, choline pelargonate may be applied at a concentration of at least 0.02 kg/ha, at least 0.04 kg/ha, at least 0.06 kg/ha, at least 0.08 kg/ha, or at least 0.1 kg/ha to the rice plant, part thereof, or locus of growth of the rice plant. For instance, choline pelargonate may be applied at a concentration of at least 0.2 kg/ha, at least 0.4 kg/ha, at least 0.6 kg/ha, at least 0.8 kg/ha, at least 1.0 kg/ha, at least 1.5 kg/ha, at least 2.0 kg/ha, or at least 2.5 kg/ha to the rice plant, part thereof, or locus of growth of the rice plant.

In embodiments, choline pelargonate may be applied at a concentration of 0.01 kg/ha to 10.0 kg/ha to the rice plant, part thereof, or locus of growth of the rice plant. In embodiments, choline pelargonate may be applied at a concentration of 0.04 kg/ha to 5.0 kg/ha, 0.1 kg/ha to 4.0 kg/ha, or 0.2 kg/ha to 10 kg/ha, 0.4 kg/ha to 8.0 kg/ha, 0.5 kg/ha to 5.0 kg/ha, 0.6 kg/ha to 4.0 kg/ha, 0.8 kg/ha to 4.0 kg/ha, 0.75 kg/ha to 3.0 kg/h, 0.8 kg/ha to 3.0 kg/ha, or 1.0 kg/ha to 3.0 kg/ha, to the rice plant, part thereof, or locus of growth of the rice plant. Preferably, choline pelargonate is applied at a concentration of 0.8 kg/ha to 3.0 kg/ha, 1.0 kg/ha to 3.0 kg/ha, or 1.5 kg/ha to 3.0 kg/ha to the rice plant, part thereof, or locus of growth of the rice plant. Such dosages advantageously result in more effective treatment of the blast disease, sheath blight, or combination thereof on the rice plant or part thereof when compared with a commercially available reference product.

In embodiments of the methods or uses as taught herein not according to the claimed invention, such as for treating blast disease, choline pelargonate may be applied at a concentration of 0.01 kg/ha to 10 kg/ha, such as at a concentration of 0.04 kg/ha to 5.0 kg/ha, 0.1 kg/ha to 4.0 kg/ha, 0.8 kg/ha to 3.0 kg/ha, or 1.0 kg/ha to 3.0 kg/ha to the rice plant, part thereof, or locus of growth of the rice plant, and the application of choline pelargonate or the composition as taught herein to the rice plant, part thereof, or locus of growth of the rice plant may be performed before the manifestation of the blast disease or the manifestation of symptoms of the blast disease on the rice plant or part thereof. Preferably, the application may be performed at least two times, and the time interval between two subsequent applications may be at least one week. Such application provides high efficacy of treatment of the blast disease on the rice plant or part thereof - and hence high rice yields.

In embodiments of the methods or uses as taught herein, such as for treating blast disease, choline pelargonate may be applied at a concentration of 0.01 kg/ha to 10 kg/ha, such as at a concentration of 0.04 kg/ha to 5.0 kg/ha, 0.1 kg/ha to 4.0 kg/ha, 0.8 kg/ha to 3.0 kg/ha, or 1.0 kg/ha to 3.0 kg/ha to the rice plant, part thereof, or locus of growth of the rice plant, and the application of choline pelargonate or the composition as taught herein to the rice plant, part thereof, or locus of growth of the rice plant may be performed after the manifestation of the blast disease or the manifestation of symptoms of the blast disease on the rice plant or part thereof, preferably before the intensity of the symptoms is at most 25%. Preferably, the application may be performed at least five times, and the time interval between two subsequent applications may be at least one week. Such application provides high efficacy of treatment of the blast disease on the rice plant or part thereof, and hence high rice yields.

In embodiments of the methods or uses as taught herein not according to the claimed invention, such as for treating sheath blight, choline pelargonate may be applied at a concentration of 0.01 kg/ha to 10 kg/ha, such as at a concentration of 0.04 kg/ha to 5.0 kg/ha, 0.1 kg/ha to 4.0 kg/ha, 0.8 kg/ha to 3.0 kg/ha, or 1.0 kg/ha to 3.0 kg/ha to the rice plant, part thereof, or locus of growth of the rice plant, and the application of choline pelargonate or the composition as taught herein to the rice plant, part thereof, or locus of growth of the rice plant may be performed before the manifestation of the sheath blight or the manifestation of symptoms of the sheath blight on the rice plant or part thereof. Preferably, the application may be performed at least two times, and the time interval between two subsequent applications may be at least one week. Such application provides high efficacy of treatment of the sheath blight on the rice plant or part thereof, and hence high rice yields.

In embodiments of the methods or uses as taught herein, such as for treating sheath blight, choline pelargonate may be applied at a concentration of 0.01 kg/ha to 10 kg/ha, such as at a concentration of 0.04 kg/ha to 5.0 kg/ha, 0.1 kg/ha to 4.0 kg/ha, 0.8 kg/ha to 3.0 kg/ha, or 1.0 kg/ha to 3.0 kg/ha to the rice plant, part thereof, or locus of growth of the rice plant, and the first application of choline pelargonate or the composition as taught herein to the rice plant, part thereof, or locus of growth of the rice plant may be performed after the manifestation of the sheath blight or the manifestation of symptoms of the sheath blight on the rice plant or part thereof, preferably before the intensity of the symptoms is at most 25%. Preferably, the application may be performed at least four times, and the time interval between two subsequent applications may be at least one week. Such application provides high efficacy of treatment of the sheath blight on the rice plant or part thereof, and hence high rice yields.

In embodiments of the methods or uses as taught herein, the efficacy level of choline pelargonate or the composition as taught herein may be at least 50%, at least 55%, at least 60%, at least 65%, at least 70%, at least 75%, at least 80%, at least 85%, at least 90%, or at least 95%.

In embodiments, the intensity (I) of crop damage caused by the fungal disease, such as blast disease or sheath blight, may be calculated by the formula (1):

$$I = \frac{\sum (n \times v)}{NV} \times 100\% \qquad (1)$$

wherein I = intensity of crop damage; n = number of tillers in each scale of attack; v = the value of the scale of attacks for each attack category; V = the highest attack scale value specified; N = the total number of tillers observed.

The scale of the attack of the blast disease may be determined as follows: 0 = no attack; 1 = spots: the size of a needle tip; 2 = spots: larger than a needle tip; 3 = spots: necrotic patches, round and somewhat oval, 1-2 mm long with brown edges; 4 = typical slots of 1-2 mm long, leaf area affected by less than 2%; 5 = typical blast leaf area affected by 2-10%; 6 = typical blast leaf area affected by 11-25%; 7 = typical blast leaf area affected by 26-50%; 8 = typical blast leaf area affected by 51-75%; 9 = typical blast leaf area affected by 76-100%.

The scale of the attack of the sheath blight may be determined as follows: 0 = no attack; 1 = early symptoms of leaf damage; 3 = symptoms of more than 25% damage in the first and second panicle; 5 = symptoms of damage of more than 25% on the first, second and third panicle; 7 = symptoms of damage of more than 25% on all grief; 9 = all tillers rot.

In embodiments, the efficacy level (in percentage) of a fungicide (such as choline pelargonate or the composition as taught herein) may be calculated according to formula (2):

$$\text{efficacy level (\%)} = (ISK - ISP)\,(ISK)^{-1} \times 100\% \qquad (2)$$

wherein: ISK = intensity of crop damage by the fungal disease in the control (without fungicide); and ISP = intensity of crop damage by the fungal disease in fungicide treatment. The intensity of crop damage may be calculated by formula (1) as provided herein.

In embodiments of the methods or uses as taught herein, such as for treating blast disease, the efficacy level of choline pelargonate or the composition as taught herein may be at least 65%, at least 70%, or at least 75%, preferably at least 80%, at least 85%, at least 90%, or at least 95%. Advantageously, in embodiments of the methods or uses as taught herein not according to the claimed invention, such as for treating blast disease, the efficacy level of choline pelargonate at a preventive treatment regimen as taught herein may be at least 80%, at least 85%, at least 90%, or at least 95%. In embodiments of the methods or uses as taught herein, such as for treating blast disease, the efficacy level of choline pelargonate at a curative treatment regimen as taught herein may be at least 65%, at least 70%, or at least 75%, preferably at least 80%, at least 85%, at least 90%, or at least 95%.

In embodiments of the methods or uses as taught herein, such as for treating sheath blight, the efficacy level of choline pelargonate, preferably when applied at a concentration of 0.8 kg/ha to 3.0 kg/ha to the rice plant, part thereof, or locus of growth of the rice plant, may be at least 50%, at least 55%, at least 60%, at least 65%, at least 70%, at least 75%, at least 80%, at least 85%, at least 90%, or at least 95%. In embodiments of the methods or uses as taught herein, such as for treating sheath blight, the efficacy level of choline pelargonate, preferably when applied at a concentration of 1.0 kg/ha to 3.0 kg/ha to the rice plant, part thereof, or locus of growth of the rice plant, may be at least 75%, at least 80%, at least 85%, at least 90%, or at least 95%.

In embodiments of the methods or uses as taught herein not according to the claimed invention, such as for treating sheath blight, the efficacy level of choline pelargonate at a preventive treatment regimen as taught herein may be at least 50%, at least 55%, at least 60%, at least 65%, at least 70%, at least 75%, at least 80%, at least 85%, at least 90%, or at least 95%. **In** embodiments of the methods or uses as taught herein not according to the claimed invention, such as for treating sheath blight, the efficacy level of choline pelargonate at a preventive treatment regimen as taught herein, preferably when applied at a concentration of 1.0 kg/ha to 3.0 kg/ha to the rice plant, part thereof, or locus of growth of the rice plant, may be at least 80%, at least 85%, at least 90%, or at least 95%. In embodiments of the methods or uses as taught herein, such as for treating sheath blight, the efficacy level of choline pelargonate at a curative treatment regimen as taught herein, preferably when applied at a concentration of 1.0 kg/ha to 3.0 kg/ha to the rice plant, part thereof, or locus of growth of the rice plant, may be at least 75%, at least 80%, at least 85%, at least 90%, or at least 95%.

In embodiments, the rice yield after application of choline pelargonate or the composition as taught herein may be enhanced (i.e., increased) by at least about 5% relative to (i.e., compared with) (i.e., the rice yield after application of choline pelargonate or the composition as taught herein may be at least about 1.05-fold) the rice yield without fungicide treatment (i.e., untreated control) or the rice yield after application of a commercially available reference fungicide.

The terms "rice yield" or "dried paddy harvest" as used herein refer to the average weight of harvested rough rice (*gabah kering panen* or GKP) per surface area. The rice yield may be expressed as kg/ha or kg/m$^2$.

The rice yield of the rice plant that has been administered choline pelargonate or a composition as taught herein can be measured at a timepoint that is between about 7 days to about 350 days, about 7 days to about 300 days, about 7 days to about 250 days, about 7 days to about 200 days, about 7 days to about 150 days, or about 10 days to about 100 days, such as about 15 days to about 75 days, about 20 days to about 60 days, or about 25 days to about 50 days following administration of said choline pelargonate or composition as taught herein to the rice plant, part thereof, or locus of growth of the rice plant. In embodiments, the rice yield of the rice plant that has been administered choline pelargonate or a composition as taught herein can be measured at the time that the rice plant is harvested to collect its grain or produce, i.e., at the time that the mature rice plant is gathered from a field. For instance, the rice yield of the rice plant that has been administered choline pelargonate or a composition as taught herein can be measured at a timepoint that is between about 75 days to about 200 days after sowing, such as about 100 days to about 150 days, or about 110 days to about 130 days after sowing. The rice yield of the rice plant that has been administered choline pelargonate or a composition as taught herein versus a rice plant not so treated (i.e., untreated control) would be measured at the same time point.

The methods and uses as taught herein can provide for advantages in plants treated therewith relative to untreated plants. An "untreated rice plant" or "untreated control" refers to a rice plant of the same species as (e.g., which is isogenic to or genetically identical to) and grown under substantially the same conditions (e.g., for the same amount of time, in the same climate, and cultivated according to the same methods using the same materials, with yield and other characteristics being measured according to the same methods) as a rice plant which has been administered choline pelargonate or a composition as taught herein, except that the untreated rice plant has not been administered said choline pelargonate or composition as taught herein to the rice plant, part thereof, or locus of growth of the rice plant. The terms may be used synonymously to "reference plant" or "reference", a plant genetically identical to and handled in substantially identical ways to a treated plant, with the exception of the treatment under investigation, and which thus offers a meaningful and informative control for detecting the effects of said treatment. A treated plant and a reference plant can thus be exposed to substantially the same environmental conditions.

Examples of commercially available contact reference fungicides include Nordox 56 WP (Allied Botanical Corporation, Philippines; a.i.: Copper oxide), Antracol 70 WP (Bayer CropScience; a.i.: Propineb), Seltima (BASF; a.i.: pyraclostrobin), Thiopron (UPL Europe ltd; a.i.: Sulphur).

Examples of commercially available systemic reference fungicides include Amistar Top 325 SC (Syngenta Bangladesh; a.i: azoxystrobin and difenoconazole), Zerox (Dhanuka; a.i.: propiconazole), Luna experience (Bayer; a.i.: Fluopyram and Tebuconazole), Roko (Biostadt; a.i.: thiophanate methyl).

In embodiments, the rice yield (e.g. expressed as kg/area) after application of choline pelargonate or the composition as taught herein may be enhanced by (i.e., increased by) at least about 5% (i.e., may be at least 1.05-fold), at least about 10% (i.e., may be at least 1.10-fold), at least about 15% (i.e., 1.15-fold), at least about 20% (i.e., 1.20-fold), at least about 25% (i.e., 1.25-fold), at least about 30% (i.e., 1.30-fold), at least about 35% (i.e., 1.35-fold), at least about 40% (i.e., 1.40-fold), at least about 45% (i.e., 1.45-fold), at least about 50% (i.e., 1.50-fold), at least about 55% (i.e., 1.55-fold), at least about 60% (i.e., 1.60-fold), at least about 65% (i.e., 1.65-fold), at least about 70% (i.e., 1.70-fold), at least about 75% (i.e., 1.75-fold), at least about 80% (i.e., 1.80-fold), at least about 85% (i.e., 1.85-fold), at least about 90% (i.e., 1.90-fold), at least about 95% (i.e., 1.95-fold), or at least about 100% relative to (i.e., compared with) (i.e., 2-fold) the rice yield (e.g. expressed as kg/area) without fungicide treatment (i.e., untreated control) or the rice yield after application of a commercially available reference fungicide.

In embodiments of the methods or uses as taught herein not according to the claimed invention, such as for treating blast disease, the rice yield (e.g. expressed as kg/area) after application of choline pelargonate at a preventive treatment regimen as taught herein may be enhanced (i.e., increased) by at least about 5% relative to (i.e., compared with) (i.e., the rice yield after a preventive treatment regimen as taught herein may be at least about 1.05-fold) the rice yield (e.g. expressed as kg/area) after application of a commercially available reference fungicide or application of choline pelargonate at a curative treatment regimen as taught herein. In embodiments of the methods or uses as taught herein not according to the claimed invention, such as for treating blast disease, the rice yield (e.g. expressed as kg/area) after application of choline pelargonate at a preventive treatment regimen as taught herein may be enhanced by (i.e., increased by) at least about 10% (i.e., 1.10-fold), at least about 15% (i.e., 1.15-fold), at least about 20% (i.e., 1.20-fold), at least about 25% (i.e., 1.25-fold), at least about 30% (i.e., 1.30-fold), at least about 35% (i.e., 1.35-fold), at least about 40% (i.e., 1.40-fold), at least about 45% (i.e., 1.45-fold), at least about 50% (i.e., 1.50-fold), at least about 55% (i.e., 1.55-fold), at least about 60% (i.e., 1.60-fold), at least about 65% (i.e., 1.65-fold), at least about 70% (i.e., 1.70-fold), at least about 75% (i.e., 1.75-fold), at least about 80% (i.e., 1.80-fold), at least about 85% (i.e., 1.85-fold), at least about 90% (i.e., 1.90-fold), at least about 95% (i.e., 1.95-fold), or at least about 100% relative to (i.e., compared with) (i.e., 2-fold) the rice yield (e.g. expressed as kg/area) after application of a commercially available reference fungicide or application of choline pelargonate at a curative treatment regimen as taught herein.

In embodiments of the methods or uses as taught herein not according to the claimed invention, such as for treating sheath blight, the rice yield (e.g. expressed as kg/area) after application of choline pelargonate at a preventive treatment regimen as taught herein, preferably when applied at a concentration of 1.0 kg/ha to 3.0 kg/ha to the rice plant, part thereof, or locus of growth of the rice plant, may be enhanced (i.e., increased) by at least about 5% relative to (i.e., compared with) (i.e., the rice yield after a preventive treatment regimen as taught herein may be at least about 1.05-fold) the rice yield (e.g. expressed as kg/area) after application of a commercially available reference fungicide or application of choline pelargonate at a curative treatment regimen as taught herein, preferably when applied at a concentration of 1.0 kg/ha to 3.0 kg/ha to the rice plant, part thereof, or locus of growth of the rice plant. In embodiments of the methods or uses as taught herein not according to the claimed invention, such as for treating sheath blight, the rice yield (e.g. expressed as kg/area) after application of choline pelargonate at a preventive treatment regimen as taught herein, preferably when applied at a concentration of 1.0 kg/ha to 3.0 kg/ha to the rice plant, part thereof, or locus of growth of the rice plant, may be enhanced by (i.e., increased by) at least about 10% (i.e., 1.10-fold), at least about 15% (i.e., 1.15-fold), at least about 20% (i.e., 1.20-fold), at least about 25% (i.e., 1.25-fold), at least about 30% (i.e., 1.30-fold), at least about 35% (i.e., 1.35-fold), at least about 40% (i.e., 1.40-fold), at least about 45% (i.e., 1.45-fold), at least about 50% (i.e., 1.50-fold), at least about 55% (i.e., 1.55-fold), at least about 60% (i.e., 1.60-fold), at least about 65% (i.e., 1.65-fold), at least about 70% (i.e., 1.70-fold), at least about 75% (i.e., 1.75-fold), at least about 80% (i.e., 1.80-fold), at least about 85% (i.e., 1.85-fold), at least about 90% (i.e., 1.90-fold), at least about 95% (i.e., 1.95-fold), or at least about 100% relative to (i.e., compared with) (i.e., 2-fold) the rice yield (e.g. expressed as kg/area) after application of a commercially available reference fungicide or application of choline pelargonate at a curative treatment regimen as taught herein, preferably when applied at a concentration of 1.0 kg/ha to 3.0 kg/ha to the rice plant, part thereof, or locus of growth of the rice plant.

Accordingly, an aspect of the present invention provides a method for enhancing (i.e., increasing) the rice yield of a rice plant relative to (i.e., compared with) the rice yield without fungicide treatment (i.e., untreated control) or the rice yield after application of a commercially available reference fungicide, the method comprising applying choline pelargonate or a composition comprising choline pelargonate to the rice plant, part thereof, or locus of growth of the rice plant, wherein the application of choline pelargonate or the composition to the rice plant, part thereof, or locus of growth of the rice plant is performed after the manifestation of symptoms of blast disease, sheath blight, or combination thereof on the rice plant or part thereof.

A further aspect relates to the use of choline pelargonate or a composition comprising choline pelargonate in the prevention or control of blast disease, sheath blight, or combination thereof on a rice plant or part thereof, wherein choline pelargonate or the composition is applied to the rice plant, part thereof, or locus of growth of the rice plant after the manifestation of symptoms of blast disease, sheath blight, or combination thereof on the rice plant or part thereof.

Accordingly , an embodiment provides the use of choline pelargonate or a composition comprising choline pelargonate in the prevention or combat of a fungal infection on a rice plant or part thereof, wherein the fungal infection is *Rhizoctonia solani* or *Pyricularia oryzae*.

Hence, an embodiment provides the use of choline pelargonate or a composition comprising choline pelargonate as a fungicide against *Rhizoctonia solani* or *Pyricularia oryzae* on a rice plant or part thereof.

In embodiments not according to the claimed invention, the fungicide is a contact fungicide. Herein, the fungicide is a systemic fungicide.

Accordingly, an embodiment provides the use of choline pelargonate or a composition comprising choline pelargonate as a systemic fungicide against *Rhizoctonia solani* or *Pyricularia oryzae* on a rice plant or part thereof. This is unexpected given the know use of pelargonic acid as a contact (i.e. non-systemic) herbicide.

The above aspects and embodiments are further supported by the following non-limiting examples.

## EXAMPLES

The examples in which choline pelargonate is applied after the manifestation of symptoms fall within the scope of the claimed invention.

## Comparative example 1: Evaluation of the use according to an embodiment of the invention of a composition comprising choline pelargonate against blast disease on winter barley

A winter barley pot trial was established to determine the efficacy of composition comprising choline pelargonate (referred to as "BPA 056") as a protective (or preventive) and curative treatment against blast disease (*Magnaporthe oryzae*) on barley.

### *Methodology*

*Experimental design*

A pot trial was sown using the winter barley cultivar SY Venture (day 0). Seed were sown into 9 cm diameter pots at a rate of 10 seed per pot, with three replicate pots sown per treatment. Pots were transferred to the glasshouse and grown at 23°C until plants reached the first leaf fully emerged growth stage (BBCH 11). The trial consisted of 10 treatments and was inoculated with a spore suspension of *M. oryzae*.

*Product application*

The treatments applied to the trial are detailed in Table 1. The composition ("BPA 056") comprised 42% (w/v) choline pelargonate or 0.42 kg choline pelargonate per L of the composition. Sprays were applied at a high-water volume (2 ml per replicate pot which is equivalent to 3125 L/ha) when plants were at BBCH 11 (protectant treatment day 11 and curative treatment day 14). Inoculated and uninoculated controls were sprayed with 2 ml of water. Treatments were applied using handheld atomiser sprayers. Curative treatments were applied on removal from the moisture chamber once moisture has dried from the inoculated leaves.

The dose of 0.5%, 0.75% and 1% (v/v) is the concentration of the composition comprising choline pelargonate in the spray solution.

Table 1: Treatment list and application timing in a trial to test the efficacy of different compositions and treatment regimens for control of blast disease on winter barley plants

| Number | Product | Dose (v/v) | Amount of product per replicate pot ($\mu$l) | Timing |
|---|---|---|---|---|
| 1 | BPA056 | 1% | 20 | 1-day pre inoculation |
| 2 | BPA056 | 0.75% | 15 | 1-day pre inoculation |
| 3 | BPA056 | 0.5% | 10 | 1-day pre inoculation |
| 4 | Proline 275 | 0.72 l/ha | 0.46 | 1-day pre inoculation |
| 5 | BPA056 | 1% | 20 | 2-days post inoculation |
| 6 | BPA056 | 0.75% | 15 | 2-days post inoculation |
| 7 | BPA056 | 0.5% | 10 | 2-days post inoculation |
| 8 | Proline 275 | 0.72 l/ha | 0.46 | 2-days post inoculation |
| 9 | Untreated - inoculated | - | - | - |
| 10 | Untreated - uninoculated | - | - | - |

*Inoculation*

Each pot was inoculated with 2 ml of a spore suspension when plants were at BBCH 11 (day 12) using handheld atomiser sprayers. The spore suspension applied contained conidia of M. *oryzae* at a concentration of $4 \times 10^4$ spores ml$^{-1}$.

Immediately after inoculation plants were transferred to moisture chambers (100 % humidity) and incubated at a temperature of approximately 25°C. Plants were removed from the moisture chambers after two days incubation and transferred to a quarantine glasshouse set at 23°C.

*Leaf assessment*

Disease was assessed once symptoms had fully developed on the inoculated controls. Disease severity was assessed as a percentage of the total leaf area affected by disease symptoms on the first leaf (the leaf treated/inoculated) of five plants per replicate pot. Leaves assessed were selected at random from each replicate pot.

*Statistical analysis*

Differences between treatments were determined through calculation of the least significant difference of the means using Genstat version 16 with analysis using ANOVA. Percentage values were transformed using an angular transformation before statistical analysis was carried out.

*Results and discussion*

Symptoms of blast disease caused by M. *oryzae* were assessed on day 24 (12 days after inoculation) when plants were at BBCH 13 (three leaves fully unfolded). Only the first leaves were assessed, that is leaves which emerged post-treatment were not assessed. Disease levels on untreated plants were assessed at 39.6 % of the leaf area affected (Table2, transformed data).

Table 2: Results of leaf area affected (%) in a trial to test the efficacy of different compositions and treatment regimens for control of blast disease on winter barley plants

| Number | Application timing | Product | Raw data | Transformed data* | ** |
|--------|--------------------|---------|----------|-------------------|-----|
| 1 | Protectant | BPA056 (1%) | 20.7 | 25.98 | c |
| 2 | Protectant | BPA056 (075%) | 35.3 | 35.93 | de |
| 3 | Protectant | BPA056 (0.5%) | 52.0 | 45.7 | f |
| 4 | Protectant | Proline 275 (0.72 l/ha) | 0.0 | 0 | a |
| 5 | Curative | BPA056 (1%) | 35.3 | 35.58 | de |
| 6 | Curative | BPA056 (0.75%) | 39.0 | 38.29 | def |
| 7 | Curative | BPA056 (0.5%) | 27.3 | 30.7 | cd |
| 8 | Curative | Proline 275 (0.72 l/ha) | 3.6 | 10.55 | b |
| 9 | Control | Inoculated | 41.0 | 39.56 | ef |
| 10 | Control | Uninoculated | 0 | 0 | a |

* Disease data were transformed using an angular transformation before any statistical analysis was carried out.
**Transformed data with the same letter are not significantly different at 5% significance level (LSD (5%) = 7. 77)

Plants treated with protectant treatments of BPA056 (1%) or Proline (0.72 L/ha), or curative treatment of BPA056 (0.5%) or Proline (0. 72 L/ha) resulted in a significant (p = 0.05) reduction in symptoms caused by *M. oryzae* compared to the inoculated control. All other treatment gave disease levels that were not significantly different from the inoculated control (Table 2, transformed data).

The level of control achieved with a commercially available reference product (Proline 275 at 0.72 L/ha), whether applied as a protectant or a curative treatment, was significantly greater than any of the BPA056 treatments. In view thereof, the excellent results obtained with BPA056 in field trials on rice (as described in Examples 1 and 2) could not be expected.

**Example 1: Field efficacy test of the use according to an embodiment of the invention of a composition comprising choline pelargonate against blast disease on rice plants**

A field trial was established to determine the efficacy of composition comprising choline pelargonate (referred to as "BPA 056") as a protectant and curative treatment against blast disease on rice plants.

*Material and Methods*

Field tests referred in this experiment are all experimental testing performed under field conditions. Location of testing: Bojong Terong Sub-Village, Palabuan Village, Ujungjaya District, Sumedang Regency, West Java.

The trial used rice variety of Inpari 32 or other commonly used varieties around the trial location and were susceptible to the rice blast disease (*Pyricularia oryzae*).

Rice seeds free of pest and disease were used. Application of fertilizer was in accordance with local recommendations. Plant maintenance was carried out in the best ways to achieve the purpose of the trial.

Seedlings were used 21 days after sowing. Amount of seed per planting hole 2-3 seed. In accordance with the habits of farmers in Indonesia and based on the approval of the pesticide commission, the dimensions of one plot were a size of 10 m x 10 m, the number of sample plants observed was 25 clumps per plot, and the distance among plots is bunds with a width of 50 cm. Planting date started at day 0.

*Plot Lay-out*

Randomized complete block design with 9 treatment regimens as provided in Table 3, and 3 replications. In brief, there were 9 different treatment regimens as reported in Table 3. Each treatment regimen was performed on three different plots (replicates). Each plot had a dimension of 10 m x 10 m. Plots were distributed according to a randomized complete block design.

Water volume used: 400 L/ha. The contact dose is the final concentration of the composition in the spray solution. For instance, Nordox was applied at final concentration of 2 g/L of spray solution. To express it as grams of Nordox per hectare: 2 g/L x 400 L/ha = 800 g of Nordox per hectare. For example, AmistarTop 325 SC was applied at final concentration of 300 mL/ha. To express it as mL/L of spray solution: 300 mL/400 L = 0.75 mL/L. For example, BPA056 was applied at 2 L/ha. To express it as ml/L of spray solution: 2000 mL/400 L = 5 mL/L of spray solution.

The composition comprising choline pelargonate (referred to as "BPA 056") had a concentration of 42% (w/v) choline pelargonate or 42 g choline pelargonate per 100 mL of the composition or 420 g (i.e. 0.42 kg) per L. The concentration of the choline pelargonate in the spray solution was: 2L composition x 0.42 kg choline pelargonate/L composition = 0.84 kg choline pelargonate; 4L composition x 0.42 L choline pelargonate/L composition = 1.68 kg choline pelargonate; or 6L composition x 0.42 L choline pelargonate/L composition = 2.52 kg choline pelargonate.

The concentration of choline pelargonate in the spray solution is thus 0.84 kg/400 L = 0.21 kg/100 L = 210 g/100 L = 2.10 g/L = 0.21 g/100 ml = 0.21% (w/v); 1.68 kg/400 L = 0.42 g/100 ml = 0.42% (w/v); or 2.52 kg/400 L = 0.63 g/100 ml = 0.63% (w/v).

The contact doses of the active ingredients were for the preventive reference product: 448 g/ha; for the curative reference product: 60 g/ha Azoxystrobin and 37.5 g/ha Difenoconazole; for BPA056 2l/ha: 0.84 kg/ha; for BPA056 4l/ha: 1.68 kg/ha; and for BPA056 6l/ha: 2.52 kg/ha.

Table 3: Tested compositions, dosages, and treatment timings in a trial to test the efficacy of different compositions and treatment regimens for control of blast disease on rice plants

| No | Treatment | Concentration active ingredient (a.i.) in composition | Contact dose composition | Timing of first application | Day of application |
|----|-----------|-------------------------------------------------------|--------------------------|-----------------------------|---------------------|
| 1 | Untreated | - | - | - | - |
| 2 | Preventive reference product (Nordox 56 WP) | Copper oxide 56% (w/v) | 2 g/L or 800 g/ha | Before manifestation of symptoms | 1. Day 20<br>2. Day 27 |
| 3 | Curative reference product (AmistarTop 325 SC) | Azoxystrobin 200 g/l + Difenoconazole 125 g/l | 300 ml/ha | When at each plot symptoms began to appear with an intensity that is less than 5% | 1. Day 34<br>2. Day 41<br>3. Day 48<br>4. Day 55<br>5. Day 62 |
| 4 | BPA056 (timing A) | Choline pelargonate 42% | 2 l/ha | Before manifestation of symptoms | 1. Day 20<br>2. Day 27 |
| 5 | BPA056 (timing A) | Choline pelargonate 42% | 4 l/ha | | |
| 6 | BPA056 (timing A) | Choline pelargonate 42% | 6 l/ha | | |
| 7 | BPA056 (timing B) | Choline pelargonate 42% | 2 l/ha | When at each plot symptoms began to appear with an intensity that is less than 5% | 1. Day 34<br>2. Day 41<br>3. Day 48<br>4. Day 55<br>5. Day 62 |
| 8 | BPA056 (timing B) | Choline pelargonate 42% | 4 l/ha | | |
| 9 | BPA056 (timing B) | Choline pelargonate 42% | 6 l/ha | | |

*Data Assessment*

Data assessment of plant damages by the target pest as well as crop production data were analysed in accordance with experimental design used with 5% difference level in treated and control plants.

*Ways and means of application*

The farmers were taught how to use the fungicide sprayer application backs carrying semiautomatic high pressure with 400 l/ha or base on calibration.

*Timing and number of applications*

For Timing A: The applications were preventive applications, applied before manifestation of symptoms.
For Timing B: The applications were curative applications. The first application was done if at each plot symptoms of an attack began to appear with an intensity that was still very light (less than 5%).
Interval of application: applications were carried out at intervals of 1 week.
Number of applications: applications were carried out at least 5 times up to 2 weeks before harvest in protocol treatment/SOP, but according to the conditions in the field, the number of applications carried out was different. This was due to the appearance of symptoms of attack that were faster, so that preventive applications were only done 2 times. The first application was made when the plants were 20 DAS.

*Criteria of Efficacy*

If the distribution of disease at the beginning of the trial was relatively evenly distributed, the efficacy criteria were based on the level of damage to plants by pathogens. However, if at the beginning of the experiment, the level of crop damage between plots was uneven, the efficacy criterion was determined based on disease progression. This can be seen through the results of analysis of variance in plantations observations (the day before treatment).
Efficacy Level of the tested fungicide may be calculated from the last observations using the formula:

$$\text{Efficacy level} = (\text{ISK} - \text{ISP})\,(\text{ISK})^{-1} \times 100\%$$

wherein: ISK = intensity of the disease attack in the control (without fungicide); ISP = intensity of disease attacks in fungicide treatment.

*Observations*

In the trial, the entire plots were treated (plot dimension 10 m x 10 m) but the disease assessment was performed on 25 rice clumps for each plot. In each experiment, the 25 clumps were selected systematically.
The level of damage to plants by *Pyricularia oryzae* was calculated by the formula:

$$I = \frac{\sum (\text{n x v})}{\text{NV}} \times 100\%$$

wherein: I = intensity of crop damage; n = number of tillers in each scale of attack; v = the value of the scale of attacks for each attack category; V = the highest attack scale value specified; N = the total number of tillers observed.
The scale of the attack of *Pyricularia oryzae* was determined as follows:
0 = no attack; 1 = spots: the size of a needle tip; 2 = spots: larger than a needle tip; 3 = spots: necrotic patches, round and somewhat oval, 1-2 mm long with brown edges; 4 = typical slots of 1-2 mm long, leaf area attacked by less than 2%; 5 = Typical blast leaf area attacked by 2 - 10%; 6 = Typical blast leaf area attacked by 11-25%; 7 = Typical leaf area blots affected 26 - 50%; 8 = Typical blast leaf area attacked by 51 - 75%; 9 = Typical blast leaf area attacked by 76 - 100%.

*Timing of observations*

For all treatment regimens, the first observation was performed 6 days after the first preventive application. Further observations were carried out with one week intervals. The observation time is presented in Table 4.

**Result and Discussion**

*Effect of the use of a composition according to an embodiment of the invention on the damage level by blast disease on rice plants*

The ability of the composition comprising choline pelargonate (as described above, referred to as "BPA056") to act as a fungicide against the rice blast disease development is provided in Table 4. In accordance with the timing of the treatments, the application treatments that were used in the research were preventive and curative treatments. As for preventive treatment, fungicide application was carried out when the symptoms of disease attack were not visible or the disease intensity value was 0%. In observations after the first application (preventive), the intensity of disease attacks was still not visible with an attack intensity of 0% for each treatment. On the second observation (preventive), symptoms of blast disease began to appear. In this observation, it can be seen that the intensity of disease attack appeared in all treatments, both in the BPA056 fungicide treatment and the comparative fungicide (NORDOX 56 WP and AMISTARTOP 325 SC). Preventive application of fungicides was thus only done 2 times, because in the second observation or one week after the second preventive fungicide application, symptoms of disease attacks have started to appear. The attack intensity on the second observation was significantly different in preventive treatment as compared to curative treatment where the fungicide application had not yet been carried out. The intensity value of the disease attack in the preventive BPA056 fungicide treatment was much lower when compared to the comparative fungicide treatment and the curative treatment.

Six days after the start of the curative treatment (observation 3), the intensity of disease attacks was not significantly different between the fungicide treatment plots. The intensity of disease attack in the fungicide treatment was much lower when compared to the control treatment. However, from all fungicide treatments, it can be seen that the preventive BPA056 fungicide treatments (timing A) had the lowest disease intensity values.

Table 4: The effect of the use of a composition comprising choline pelargonate ("BPA056") according to embodiments of the invention and of comparative compositions and treatment regimens on the average intensity of blast disease attack (%) on rice plants (n = 3)*

| Treatment/ Observation (number/day) | The intensity of blast disease attack (%) | | | | | | |
|---|---|---|---|---|---|---|---|
| | 1 | 2 | 3 | 4 | 5 | 6 | 7 |
| | Day 26 | Day 33 | Day 40 | day 47 | Day 54 | Day 61 | Day 68 |
| Untreated | 0 | 2.96 bc | 9.04 c | 11.26 d | 14.81 c | 19.26 d | 25.26 e |
| Preventive reference product | 0 | 2.61 bc | 2.61 ab | 2.88 ab | 3.21 ab | 3.35 ab | 3.97 bc |
| Curative reference product | 0 | 2.88 bc | 3.88 b | 5.03 c | 5.38 b | 5.56 bc | 5.78 cd |
| BPA056 (timing A) 2 l/ha | 0 | 1.57 ab | 2.09 ab | 3.27 bc | 3.79 b | 3.79 b | 4.05 bc |
| BPA056 (timing A) 4 l/ha | 0 | 0.91 a | 1.17 a | 1.17 a | 1.38 a | 1.38 a | 1.38 ab |
| BPA056 (timing A) 6 l/ha | 0 | 1.04 a | 1.04 a | 1.17 a | 1.17 a | 1.17 a | 1.17 a |
| BPA056 (timing B) 2 l/ha | 0 | 2.67 bc | 3.26 ab | 5.04 c | 5.33 b | 6.22 c | 6.81 d |
| BPA056 (timing B) 4 l/ha | 0 | 3.26 c | 3.41 ab | 3.70 bc | 4.15 b | 4.33 bc | 4.52 cd |
| BPA056 (timing B) 6 l/ha | 0 | 2.96 bc | 2.96 ab | 3.26 bc | 3.67 b | 3.85 b | 3.93 bc |
| * The values in the same column which are marked with a corresponding letter show no significant difference through Duncan's Multiple Range Test on the significance level of 5%. | | | | | | | |

An increase in the intensity of the damage occurred at each observation. The observations in Table 4 show that the increase in the intensity of damage in BPA056 treatment was very low at each subsequent observation. This is different when compared to control treatment, where the increase in the intensity of attacks was quite significant. At the end of the experiment, the highest rice blast intensity was detected in the control treatment which reached 25.26%. Meanwhile, in BPA056 fungicide treatment, the intensity of rice blast was detected to be lower. Fungicide BPA056 preventive treatment (timing A) was the best treatment to suppress the development of rice blast when compared with curative treatment (timing B). Based on the overall observation results, it can be seen that in general the preventive fungicide application had a lower attack intensity value when compared to the curative fungicide application. Fungicide BPA056 preventive treatment (timing A) at a dose of 4 l/ha or 6 l/ha provided better treatment of rice blast when compared with a preventive reference product. Fungicide BPA056 curative treatment (timing B) at a dose of 4 l/ha or 6 l/ha provided better treatment of rice blast when compared with a curative reference product.

Table 5: Efficacy level of the use of a composition comprising choline pelargonate ("BPA056") according to embodiments of the invention and of comparative compositions and treatment regimens on blast disease on rice plants at the last observation (day 68)

| Treatment | Efficacy Level (%) |
|---|---|
| Untreated | 0 |
| Preventive reference product | 84.27 |
| Curative reference product | 77.10 |
| BPA056 (timing A) 2 l/ha | 83.95 |
| BPA056 (timing A) 4 l/ha | 94.55 |
| BPA056 (timing A) 6 l/ha | 95.35 |
| BPA056 (timing B) 2 l/ha | 73.02 |
| BPA056 (timing B) 4 l/ha | 82.10 |
| BPA056 (timing B) 6 l/ha | 84.45 |

The level of effectiveness of a fungicide is measured from the value of its efficacy level. Fungicides are deemed to be effective in controlling disease when they have an efficacy level of above 50%. The level of effectiveness of the fungicide BPA056 can be seen in Table 5. Based on the calculation of efficacy level, it is known that all the doses tested were effective in controlling blast in rice. The fungicide BPA056 at a dose of 6 l/ha of preventive treatment resulted in the highest efficacy level value of 95.35% which is effective in controlling rice blast. Nevertheless, the other test dosages also showed efficacy level values of more than 50%. Thus, such dosages were also deemed to be as effective in terms of controlling the blast disease.

*Phytotoxicity of the use of a composition illustrating the invention*

Phytotoxicity means a damage symptom on plants as the result of fungicide application, even though the said fungicide has been applied in accordance with the recommended degree. Based upon the observation results of the appearance of the rice crops on the trial plots, symptoms of phytotoxicity due to the application of BPA056 were not found. No phytotoxicity was observed on the plots treated with various dosages and treatment regimens of BPA056.

*The effect on rice yields of the use of a composition illustrating the invention*

The effect of the application of a composition comprising choline pelargonate ("BPA056") according to embodiments of the invention and of comparative compositions and treatment regimens on the rice yield is provided in Table 6. The use of BPA056 was able to suppress the yield loss which is caused by the blast disease on rice crops. The average result of harvested rough rice (*gabah kering panen* or GKP) on all fungicide treatment was higher than that of the control treatment.

The highest GKP was achieved on the BPA056 treatment with the dosage of 6 l/ha of the preventive treatment, which is at the amount of 21.59 kg/plot. This yield significantly differed from the results of other treatments. The GKP result on the control treatment with the amount of 14.42 kg/plot differed significantly with the BPA056 treatment. The difference of GKP results between the BPA056 treatment and control treatment proves that the application of BPA056 was capable of maintaining the yields.

Table 6: The effect of the use of a composition comprising choline pelargonate ("BPA056") according to embodiments of the invention and of comparative compositions and treatment regimens on the yield of rice (day 89)

| Treatment | Average dried paddy (kg/plot) (n = 3)* |
|---|---|
| Untreated | 14.24 a |
| Preventive reference product | 20.96 cde |
| Curative reference product | 18.08 b |
| BPA056 (timing A) 2 l/ha | 20.43 cde |
| BPA056 (timing A) 4 l/ha | 21.21 de |

(continued)

| Treatment | Average dried paddy (kg/plot) (n = 3)* |
|---|---|
| BPA056 (timing A) 6 l/ha | 21.59 e |
| BPA056 (timing B) 2 l/ha | 18.52 b |
| BPA056 (timing B) 4 l/ha | 19.33 bc |
| BPA056 (timing B) 6 l/ha | 19.67 bcd |
| * Values in the same columns which are marked with a corresponding letter show no significant difference according to Duncan's Multiple Range Test on the significance level of 5%. | |

*Conclusions*

- the application of a composition comprising choline pelargonate on rice plants (both with preventive and curative treatment regimen) was able to suppress the development of blast disease on rice plants with an efficacy level of higher than 50%.

- the application of a composition comprising choline pelargonate on rice plants was more effective (e.g. higher efficacy level) when the treatment was a preventive treatment as compared to a curative treatment.

- the application of a composition comprising choline pelargonate on rice plants (both with preventive and curative treatment regimen) was able to suppress the rice yield loss compared to the control treatment.

- the application of a composition comprising choline pelargonate on rice plants resulted in a higher rice yield when the treatment was a preventive treatment as compared to a curative treatment.

- the preventive application of a composition comprising choline pelargonate was the best treatment regimen in order to control blast disease on rice plants.

- the preventive application of a composition comprising choline pelargonate at a dose of 4 l/ha or 6 l/ha provided better treatment of rice blast (i.e. less intensity of blast disease and better efficacy) when compared with a preventive reference product

- the curative application of a composition comprising choline pelargonate at a dose of 4 l/ha or 6 l/ha provided better treatment of rice blast (i.e. less intensity of blast disease and better efficacy) when compared with a curative reference product.

- the application of a composition comprising choline pelargonate on rice plants (both with preventive and curative treatment regimen) with all tested dosages (0.21%, 0.42%, or 0.63% (w/v) choline pelargonate) caused no phytotoxicity symptoms on the rice plants.

**Example 2: Field efficacy test of the use according to an embodiment of the invention of a composition comprising choline pelargonate against sheath blight disease on rice plants**

*Material and Methods*

Field tests referred in this experiment are all experimental testing performed under field conditions. Location of testing: Bojong Terong Sub-Village, Palabuan Village, Ujungjaya District, Sumedang Regency, West Java.

The trial used rice variety of Inpari 32 or other commonly used varieties around the trial location and were susceptible to sheath blight disease (*Rhizoctonia solani*).

Rice seeds free of pest and disease were used. Application of fertilizer was in accordance with local recommendations. Plant maintenance was carried out in the best ways to achieve the purpose of the trial.

Seedlings were used 21 days after sowing. Amount of seed per planting hole 2-3 seed. In accordance with the habits of farmers in Indonesia and based on the approval of the pesticide commission, the dimensions of one plot were a size of 10 m x 10 m, the number of sample plants observed was 25 clumps per plot, and the distance among plots is bunds with a width of 50 cm. Planting date started at day 0.

*Plot Lay-out*

Randomized complete block design with 9 treatments as provided in Table 7, and three replications. In brief, there were 9 treatment regimens as reported in Table 7. Each treatment regimen was performed on three different plots (replicates). Each plot had a dimension of 10 m x 10 m. Plots were distributed according to a randomized complete block design.

Water volume used: 400 L/ha. The contact dose is the final concentration of the composition in the spray solution. For instance, Antracol 70 was applied at final concentration of 1 kg/ha. To express it as g/L of spray solution: 1000g/400 L = 2.5 g/L.

The composition comprising choline pelargonate (referred to as "BPA 056") had a concentration of 42% (w/v) choline pelargonate or 42 g choline pelargonate per 100 mL of the composition or 420 g (i.e. 0.42 kg) per L. The concentration of the choline pelargonate in the spray solution was: 2L composition x 0.42 kg choline pelargonate/L composition = 0.84 kg choline pelargonate; 4L composition x 0.42 L choline pelargonate/L composition = 1.68 kg choline pelargonate; or 6L composition x 0.42 L choline pelargonate/L composition = 2.52 kg choline pelargonate.

The concentration of choline pelargonate in the spray solution (i.e. contact dose active ingredient) is thus 0.84 kg/400 L = 0.21 kg/100 L = 210 g/100 L = 2.10 g/L = 0.21g/100 ml = 0.21% (w/v); 1.68 kg/400 L = 0.42 g/100 ml = 0.42% (w/v); or 2.52 kg/400 L = 0.63 g/100 ml = 0.63% (w/v).

The contact dose of the active ingredients were for the preventive reference product: 700 g/ha; for the curative reference product: 60 g/ha Azoxystrobin and 37.5 g/ha Difenoconazole; for BPA056 2l/ha: 0.84 kg/ha; for BPA056 4l/ha: 1.68 kg/ha; for BPA056 6l/ha: 2.52 kg/ha.

Table 7: Tested compositions, dosages, and treatment timings in a trial to test the efficacy of different compositions and treatment regimens for control of sheath blight disease (*Rhizoctonia sp.*) in rice plants

| No | Treatment | Concentration active ingredient (a.i.) in composition | Contact dose of composition | Timing of first application | Day of application |
|---|---|---|---|---|---|
| 1 | Untreated | - | - | - | - |
| 2 | Preventive reference product (Antracol 70 WP) | Propineb 70% | 1 kg/ha | Before manifestation of symptoms | 1. Day 29 2. Day 36 |
| 3 | Curative reference product (AmistarTop 325 SC) | Azoxystrobin 200 g/l and Difenoconazole 125 g/l | 300 ml/ha | When at each plot symptoms began to appear with an intensity that is less than 5% | 1. Day 43 2. Day 50 3. Day 57 4. Day 64 |
| 4 | BPA056 (timing A) | Choline Pelargonate 42% | 2 l/ha | Before manifestation of symptoms | 1. Day 29 2. Day 36 |
| 5 | BPA056 (timing A) | Choline Pelargonate 42% | 4 l/ha | | |
| 6 | BPA056 (timing A) | Choline Pelargonate 42% | 6 l/ha | | |
| 7 | BPA056 (timing B) | Choline Pelargonate 42% | 2 l/ha | When at each plot symptoms began to appear with an intensity that is less than 5% | 1. Day 43 2. Day 50 3. Day 57 4. Day 64 |
| 8 | BPA056 (timing B) | Choline Pelargonate 42% | 4 l/ha | | |
| 9 | BPA056 (timing B) | Choline Pelargonate 42% | 6 l/ha | | |

*Data Assessment*

Data assessment of plant damages by the target pest as well as crop production data were analysed in accordance with experimental design used with 5% difference level in treated and control plants.

*Ways and means of application*

The farmers were taught how to use the fungicide sprayer application backs carrying semiautomatic high pressure with 400 l/ha or base on calibration.

*Time and Number of Applications*

For Timing A: The applications were preventive applications, applied before manifestation of symptoms.
For Timing B: The applications were curative applications. The first curative application was done if at each plot symptoms of an attack began to appear with an intensity that was still very light (less than 5%).
Interval of Application: applications were carried out at intervals of 1 week. Applications were carried out at least 5 times up to 2 weeks before harvest (in protocol treatment/SOP), but according to the conditions in the field, the number of applications carried out was different. This was due to the appearance of symptoms of attack that were faster, so that for preventive applications it could only be done 2 times. The first preventive application was made when the plants were 29 DAS. For curative applications, only 4 applications were made, this was due to the condition of the plants that were about to enter the harvest phase. The application time is presented in Table 7.

*Criteria of Efficacy*

If the distribution of disease at the beginning of the trial was relatively evenly distributed, the efficacy criteria were based on the level of damage to plants by pathogens. However, if at the beginning of the experiment, the level of crop damage between plots was uneven, the efficacy criterion was determined based on disease progression. This can be seen through the results of analysis of variance in plantations observations (the day before treatment).
Efficacy Level of the tested fungicide is expected to be $\geq$ 50% calculated from the last observations using the formula:

$$\text{Efficacy level} = (\text{ISK} - \text{ISP})\,(\text{ISK})^{-1} \times 100\%$$

wherein: ISK = intensity of the disease attack in the control (without fungicide); ISP = intensity of disease attacks in fungicide treatment.

*Observations*

In the trial, the entire plots were treated (plot dimension 10 m x 10 m) but the disease assessment was performed on 25 rice clumps for each plot. In each experiment, the 25 clumps were selected systematically.
The level of damage to plants by *Rhizoctonia solani* was calculated by the formula:

$$I = \frac{\sum (\text{n x v})}{\text{NV}} \times 100\%$$

wherein: I = intensity of crop damage; n = number of tillers in each scale of attack; v = the value of the scale of attacks for each attack category; V = the highest attack scale value specified; N = the total number of tillers observed.
The scale of the attack of *Rhizoctonia solani* was determined as follows:
0 = no attack; 1 = early symptoms of leaf damage; 3 = symptoms of more than 25% damage in the first and second panicle; 5 = symptoms of damage of more than 25% on the first, second and third panicle; 7 = symptoms of damage of more than 25% on all grief; 9 = all tillers rot.

*Timing of observations*

For all treatment regimens, the first observation was performed 6 days after the first preventive application. Further observations were carried out with one week intervals. The observation time is presented in Table 8.

**Result and Discussion**

*Effect on the intensity of sheath blight on rice plants of the use of a composition according to an embodiment of the invention*

The test consisted of two treatment regimens, namely preventive and curative. On the first observation, the symptoms of disease attack were still not visible, it can be seen that the disease intensity value was 0% (Table 8). On the second observation, the symptoms of disease began to appear, so no further preventive applications were performed.

The data in Table 8 show that the application of a composition comprising choline pelargonate (referred to as "BPA056") reduced the intensity of sheath blight as all BPA056 treatments produced significantly different results compared to the control. During the experiment, the intensity of sheath blight treated with BPA056, especially at a high dose, was low compared to the control treatment. This shows that the application of the composition comprising choline pelargonate was able to suppress the development of sheath blight in rice plants.

Table 8: The effect of the use of a composition comprising choline pelargonate ("BPA056") according to embodiments of the invention and of comparative compositions and treatment regimens on the average intensity of sheath blight (%) on rice plants (n= 3)*

| Treatment/ Observation (number/day) | The intensity of sheath blight disease attack (%) | | | | | |
|---|---|---|---|---|---|---|
| | 1 | 2 | 3 | 4 | 5 | 6 |
| | Day 35 | Day 42 | Day 49 | Day 56 | Day 63 | Day 70 |
| Untreated | 0 | 5.04 e | 6.52 f | 7.41 d | 11.11 e | 13.48 d |
| Preventive reference product | 0 | 3.66 cde | 4.18 de | 4.59 c | 5.21 d | 5.72 b |
| Curative reference product | 0 | 4.59 de | 4.74 e | 4.89 c | 6.44 d | 6.67 b |
| BPA056 (timing A) 2 l/ha | 0 | 1.96 abc | 2.62 bc | 2.75 b | 5.62 d | 6.40 b |
| BPA056 (timing A) 4 l/ha | 0 | 1.18 ab | 1.18 a | 1.18 a | 1.44 ab | 1.70 a |
| BPA056 (timing A) 6 l/ha | 0 | 0.78 a | 1.05 a | 1.18 a | 1.18 a | 1.31 a |
| BPA056 (timing B) 2 l/ha | 0 | 3.26 cd | 3.70 cde | 4.30 c | 6.82 d | 9.04 c |
| BPA056 (timing B) 4 l/ha | 0 | 2.67 bc | 2.82 bcd | 2.96 b | 3.11 c | 3.11 a |
| BPA056 (timing B) 6 l/ha | 0 | 1.48 ab | 2.08 ab | 2.37 ab | 2.96 bc | 3.11 a |

\* The values in the same column which are marked with the same letter show no significant difference according to Duncan's Multiple Range Test at a significance level of 5%.

Sheath blight severity increased overtime (with the age of the plant). High increases in the disease intensity occurred in the test with the lowest dose of BPA056, and in the comparative and control fungicide treatments. Symptoms of sheath blight and panicles that became empty were observed in the treatment with the lowest dose (2 l/ha) of BPA056. Symptoms of severe sheath blight and panicles that became empty were observed on comparative and control treatments. The development of the disease mainly occurred when the plant was mature.

Among the treatments regimens at various doses and application times, the preventive application of the highest dose of 6 l/ha of BPA056 showed the lowest intensity of the disease (Table 8). The results obtained for the preventive application of the highest dose of 6 l/ha of BPA056 was not statistically nor significantly different than the preventive application of a dose of 4 l/ha from the second to the last observations. In the last observation, the intensity of sheath blight in all BPA056 treatments was significantly different from the control treatments.

The lowest intensity of 1.31% occurred at the last observation in the 6 l/ha treatment with the preventive application. This lowest intensity obtained at the last observation for the preventive application of the highest dose of 6 l/ha of BPA056 was statistically and significantly different compared to the intensity in the control treatment that reached 13.48% at the last observation. All dosage levels of BPA056 did not cause phytotoxic symptoms in the tested rice plants.

*Efficacy of the use of a composition comprising choline pelargonate according to embodiments of the invention against sheath blight on rice plants*

The efficacy of BPA056 in suppressing sheath blight showed great results. An efficacy level of more than 50% was achieved for BPA056 treatment applied with both preventive and curative application at a dose of 4 l/ha and 6 l/ha, and with preventive application at a dose of 2 l/ha. However, the same result did not apply for BPA056 at a dose of 2 l/ha with a curative application where the level of efficacy reached less than 50% at the last observation (Table 9). The highest level of efficacy was achieved at the preventive dose of 6 l/ha that reached 90.31%.

Table 9: Efficacy Level of the use of a composition according to embodiments of the invention ("BPA056") and of comparative compositions against sheath blight on rice plants (day 70)

| Treatment | Efficacy Level (%) |
|---|---|
| Untreated | 0 |
| Preventive reference product | 57.58 |
| Curative reference product | 50.53 |
| BPA056 (timing A) 2 l/ha | 52.51 |
| BPA056 (timing A) 4 l/ha | 87.39 |
| BPA056 (timing A) 6 l/ha | 90.31 |
| BPA056 (timing B) 2 l/ha | 32.98 |
| BPA056 (timing B) 4 l/ha | 76.91 |
| BPA056 (timing B) 6 l/ha | 76.91 |

*Effect on rice yields of the use of a composition comprising choline pelargonate according to embodiments of the invention against sheath blight on rice plants*

The effect of BPA056 application on rice yields is presented in Table 10. The use of BPA056 was able to reduce yield losses caused by sheath blight in rice. The average dried paddy harvest on all experimental plots was significantly different from the control treatment (Table 10).

The highest yield was achieved with preventive application of BPA056 at a dose of 6 l/ha that resulted in an average yield of 20.24 kg/plot, which was not statistically different to a preventive dose of 4 l/ha that resulted in an average yield of 20.13 kg/plot (Table 10). Moreover, the two highest doses of BPA056 (4 l/ha and 6 l/ha) with curative application yielded 19.73 kg/plot and 19.93 kg/plot respectively. Thus, the application of a composition comprising choline pelargonate on rice plants according to embodiments of the invention was able to suppress sheath blight and to reduce rice yield losses caused by the disease.

Table 10: The effect of the use of a composition comprising choline pelargonate ("BPA056") according to embodiments of the invention and of comparative compositions and treatment regimens on the yield of rice (day 96)

| Treatment | Average dried paddy (kg/plot) (n = 3)* |
|---|---|
| Untreated | 14.36 a |
| Preventive reference product | 18.53 bcd |
| Curative reference product | 17.41 b |
| BPA056 (timing A) 2 l/ha | 18.44 bc |
| BPA056 (timing A) 4 l/ha | 20.13 e |
| BPA056 (timing A) 6 l/ha | 20.24 e |
| BPA056 (timing B) 2 l/ha | 17.29 b |
| BPA056 (timing B) 4 l/ha | 19.73 cde |
| BPA056 (timing B) 6 l/ha | 19.93 de |
| * Values in the same columns which are marked with a corresponding letter show no significant difference according to Duncan's Multiple Range Test at a significance level of 5%. ||

**Conclusions**

-    the preventive application of a composition comprising choline pelargonate on rice plants was effective at all tested dosages (0.21%, 0.42%, or 0.63% (w/v) choline pelargonate) in suppressing the incidence of sheath blight in rice plants with an efficacy level of more than 50%.

- the curative application of a composition comprising choline pelargonate on rice plants at a dose of 4 l/ha (0.42% (w/v) choline pelargonate) and 6 l/ha (0.63% (w/v) choline pelargonate) was effective in suppressing the incidence of sheath blight in rice plants with an efficacy level of more than 50%.

- the application of a composition comprising choline pelargonate on rice plants was more effective against sheath blight (e.g. higher efficacy level) when the treatment was a preventive treatment as compared to a curative treatment.

- the application of a composition comprising choline pelargonate to rice plants (both with preventive and curative treatment regimen) at all tested dosages reduced rice yield losses due to sheath blight as compared to control treatment.

- the preventive application of a composition comprising choline pelargonate at a dose of 4 l/ha or 6 l/ha provided better treatment of sheath blight (i.e. less intensity of sheath blight disease and better efficacy at last observation) when compared with a preventive reference product.

- the curative application of a composition comprising choline pelargonate at a dose of 4 l/ha or 6 l/ha provided better treatment of sheath blight (i.e. less intensity of sheath blight disease and better efficacy at last observation) when compared with a curative reference product.

- the application of a composition comprising choline pelargonate on rice plants resulted in a higher rice yield when the treatment against sheath blight was a preventive treatment as compared to a curative treatment.

- the preventive application of a composition comprising choline pelargonate was the best treatment regimen in order to control sheath blight disease on rice plants.

- the application of a composition comprising choline pelargonate against sheath blight on rice plants (both with preventive and curative treatment regimen) at all tested dosages did not cause phytotoxicity symptoms on the rice plants.

**Example 3: Method according to an embodiment of the invention for treating sheath blight disease on rice plants**

A field trial was established to test the efficacy of different compositions for control of sheath blight (*Rhizoctonia solani*) on rice in Thailand at two locations: L1: Bang Kham, Sriprachan, Suphanburi; and L2: Don Pru, Sriprachan, Suphanburi. Disease inoculation was performed 14 days before 1st spray.

At location L1, experimental design was randomize complete block (RCB); number of different treatments: six as provided in Table 11; number of replications: 4; plot size: 6 x 5 m/plot; rice variety: PTT1; and spray volume: 312.5 L/ha. One treatment had 4 replications, with one replication having 10 samplings.

The composition comprising choline pelargonate (referred to as "BPA 056") had a concentration of 42% (w/v) choline pelargonate or 42 g choline pelargonate per 100 mL of the composition or 420 g (i.e. 0.42 kg) per L. The concentration of the choline pelargonate in the spray solution was (per ha): 2L composition x 0.42 kg choline pelargonate/L composition = 0.84 kg choline pelargonate; 3L composition x 0.42 L choline pelargonate/L composition = 1.26 kg choline pelargonate; or 4L composition x 0.42 L choline pelargonate/L composition = 1.68 kg choline pelargonate.

Table 11: Tested compositions, dosages, and treatment timings in a trial to test the efficacy of different compositions and treatment regimens for control of sheath blight disease (*Rhizoctonia solani*) on rice plants in Thailand at locations L1 and L2

| No | Treatment | Rate | No. of spray | Timing |
|----|-----------|------|--------------|--------|
| 1 | BPA 056 | 2000 ml/ha | 2 | 1st: When found a symptom of disease, 2nd: at 7 day interval |
| 2 | BPA 056 | 3000 ml/ha | 2 | 1st: When found a symptom of disease, 2nd: at 7 day interval |
| 3 | BPA 056 | 4000 ml/ha | 2 | 1st: When found a symptom of disease, 2nd: at 7 day interval |
| 4 | Validamycin 3% SL | 625 ml/ha | 2 | 1st: When found a symptom of disease, 2nd: at 7 day interval |

(continued)

| No | Treatment | Rate | No. of spray | Timing |
|---|---|---|---|---|
| 5 | Tricyclazole | 750 g/ha | 2 | 1st: When found a symptom of disease, 2nd: at 7 day interval |
| 6 | Untreated | - | - | |

Data assessments included percentage of length (cm) of the symptom infected and length of the plant (cm) before 1st spray; before 2nd spray; 7 days after 2nd spray; at 2 weeks after 2nd spray; at 3 weeks after 2nd spray; and at 2 weeks before harvest. A summary of the timing of the data assessment at location L1 is provided in Table 12.

The percentage disease was calculated as follows:

$$\text{Disease (\%)} = [\text{length of infection symptom (cm)} / \text{length of plant (cm)}] \times 100$$

Table 12: Timing of data assessment of the trial in rice plants at location L1 Bang Kham

| Stage of rice | Data assessment | Abbreviation |
|---|---|---|
| sowing | None | |
| 61 DAS | Sheath blight disease inoculation | |
| 75 DAS | Before 1st spray/ spray #1 | BA#1 |
| 82 DAS | Before 2nd spray/ phytotoxicity/ spray #2 | BA#2 |
| 89 DAS | 7 days after 2nd spray/ phytotoxicity | 7 DAA#2 |
| 96 DAS | 2 weeks after 2nd spray/ phytotoxicity | 14 DAA#2 |
| 103 DAS | 3 weeks after 2nd spray/ phytotoxicity | 21 DAA#2 |
| 106 DAS | 2 weeks before harvest/ phytotoxicity | 2 WBH |
| 120 DAS | Yield assessment | |
| DAS: days after sowing | | |

Table 13 illustrates the percentage disease after treatment of the rice plants at location L1 with a composition illustrating the invention ("BPA 056") at 2000 ml/ha, 3000 ml/ha and 4000 ml/ha, and after treatment with commercially available reference products, validamycin 3% SL at 625 ml/ha and Tricyclazole at 750 g/ha. The results in Table 13 show that the composition illustrating the invention ("BPA 056") at 3000 and 4000 ml/ha showed excellent control against sheath blight on rice plants as compared to untreated rice plants. The composition illustrating the invention at 3000 and 4000 ml/ha was also superior to the commercially available reference products, validamycin 3% SL at 625 ml/ha and Tricyclazole at 750 g/ha. The composition illustrating the invention at 2000 ml/ha also showed acceptable control against sheath blight on rice plants.

No phytotoxicity was observed on rice plants after all treatments when assessed before 2nd spray, 7 days after 2nd spray, 2 weeks after 2nd spray, 3 weeks after 2nd spray, and 2 weeks before harvest.

Table 13: Effect of treatment with a composition comprising choline pelargonate ("BPA 056") according to embodiments of the invention and comparative compositions on the percentage of disease (%) on rice plants at location L1 (n= 40)*

| No | Treatment | Rate | BA#1 | BA#2 | 7 DAA#2 | 14 DAA#2 | 21 DAA#2 | 2 WBH |
|---|---|---|---|---|---|---|---|---|
| 1 | BPA 056 | 2000 ml/ha | 22.16 a** | 39.35 b | 40.61 c | 39.74 d | 39.79 d | 39.72 c |
| 2 | BPA 056 | 3000 ml/ha | 22.38 a | 31.56 a | 31.32 ab | 28.82 a | 29.00 a | 29.46 a |
| 3 | BPA 056 | 4000 ml/ha | 22.38 a | 30.82 a | 29.34 a | 28.68 a | 27.69 a | 28.22 a |
| 4 | Validamyci n 3% SL | 625 ml/ha | 22.23 a | 38.61 b | 35.99 bc | 35.33 b | 33.93 b | 33.83 b |
| 5 | Tricyclazole | 750 g/ha | 22.57 a | 40.05 bc | 35.66 bc | 37.90 c | 35.89 c | 35.63 b |

(continued)

| No | Treatment | Rate | BA#1 | BA#2 | 7 DAA#2 | 14 DAA#2 | 21 DAA#2 | 2 WBH |
|---|---|---|---|---|---|---|---|---|
| 6 | Untreated | - | 22.33 a | 44.95 c | 46.98 d | 47.92 e | 50.05 e | 50.72 d |
| CV (%) | | | 1.80 | 8.80 | 9.10 | 3.30 | 3.50 | 4.10 |
| * % disease: average value of % disease from 4 replications and 10 samplings per replication ** the values in the same column which are marked with the same letter show no significant difference according to standard parametric statistical test | | | | | | | | |

At location L2, experimental design was randomize complete block (RCB); number of different treatments: six as provided in Table 11; number of replications: 4; plot size: 6 x 5 m/plot; rice variety: PTT1; and spray volume: 312.5 L/ha. One treatment had 4 replications, with one replication having 10 samplings.

Data assessments included percentage of length (cm) of the symptom infected and length of the plant (cm) before 1st spray; before 2nd spray; 7 days after 2nd spray; 2 weeks after 2nd spray; at 3 weeks after 2nd spray; and at 2 weeks before harvest. A summary of the timing of the data assessment at location L2 is provided in Table 14.

Table 14: Timing of data assessment of the trial in rice plants at location L2 Don Pru

| Stage of rice | Data assessment | Abbreviation |
|---|---|---|
| sowing | None | |
| 56 DAS | Disease inoculation | |
| 70 DAS | Before 1st spray / spray #1 | BA#1 |
| 77 DAS | Before 2nd spray / phytotoxicity/ spray #2 | BA#2 |
| 84 DAS | 7 days after 2nd spray/ phytotoxicity | 7 DAA#2 |
| 91 DAS | 2 weeks after 2nd spray/ phytotoxicity | 14 DAA#2 |
| 98 DAS | 3 weeks after 2nd spray/ phytotoxicity | 21 DAA#2 |
| 106 DAS | 2 weeks before harvest/ phytotoxicity | 2 WBH |
| 120 DAS | Yield assessment | |
| DAS: days after sowing | | |

Table 15 illustrates the percentage disease after treatment of the rice plants at location L2 with a composition illustrating the invention ("BPA 056") at 2000 ml/ha, 3000 ml/ha and 4000 ml/ha, and after treatment with commercially available reference products, validamycin 3% SL at 625 ml/ha and Tricyclazole at 750 g/ha. The results in Table 15 show that the composition illustrating the invention ("BPA 056") at 3000 and 4000 ml/ha showed excellent control against sheath blight on rice plants as compared to untreated rice plants, and was also superior to the commercially available reference products, validamycin 3% SL at 625 ml/ha and Tricyclazole at 750 g/ha. The composition illustrating the invention ("BPA 056") at 2000 ml/ha also showed acceptable control against sheath blight on rice plants.

No phytotoxicity was observed on rice plants after all treatments when assessed before 2nd spray, 7 days after 2nd spray, 2 weeks after 2nd spray, 3 weeks after 2nd spray and 2 weeks before harvest.

Table 15: Effect of treatment with a composition comprising choline pelargonate ("BPA056") according to embodiments of the invention and comparative compositions on the percentage of sheath blight disease (%) on rice plants at location L2 (n= 40)*

| No. | Treatment | Rate | BA#1 | BA#2 | 7 DAA#2 | 14 DAA#2 | 21 DAA#2 | 2 WBH |
|---|---|---|---|---|---|---|---|---|
| 1 | BPA 056 | 2000 ml/ha | 28.88 a | 40.29 c | 39.01 c | 49.60 e | 49.75 e | 49.07 c |
| 2 | BPA 056 | 3000 ml/ha | 25.93 a** | 33.25 b | 30.47 a | 33.22 b | 33.29 b | 32.70 a |
| 3 | BPA 056 | 4000 ml/ha | 25.93 a | 27.81 a | 29.10 a | 29.79 a | 30.12 a | 30.20 a |
| 4 | Validamyci n 3% SL | 625 ml/ha | 26.37 a | 32.69 b | 36.46 b | 35.00 c | 34.47 c | 31.52 a |
| 5 | Tricyclazole | 750 g/ha | 26.10 a | 32.67 b | 37.90 bc | 38.71 d | 39.75 d | 39.11 b |

(continued)

| No. | Treatment | Rate | BA#1 | BA#2 | 7 DAA#2 | 14 DAA#2 | 21 DAA#2 | 2 WBH |
|---|---|---|---|---|---|---|---|---|
| 6 | Untreated | - | 25.76 a | 41.95 c | 58.11 d | 62.13 f | 62.31 f | 61.13 d |
| | | CV (%) | 2.10 | 6.40 | 3.70 | 1.70 | 0.80 | 4.00 |

\* % disease: average value of % disease from 4 replications and 10 samplings per replication
\*\* the values in the same column which are marked with the same letter show no significant difference according to standard parametric statistical test

## Example 4: Method according to an embodiment of the invention for increasing rice yield of rice plants

The field trial as described in Example 3 was performed in Thailand at two locations: L1: Bang Kham, Sriprachan, Suphanburi; and L2: Don Pru, Sriprachan, Suphanburi.

At harvest, the rice yield was determined as follows:

1) yield in kg/plot (i.e., 3m x 3m = 9 m$^2$). The central part of each plot (9 m$^2$) was harvested.

2) yield in kg/rai (i.e., 1600 m$^2$)

3) yield in kg/ha (i.e., 1600 m$^2$ x 6.25)

Table 16 illustrates the yield at location L1 after application of a composition illustrating the invention ("BPA 056") at 2000 ml/ha, 3000 ml/ha and 4000 ml/ha, and commercially available reference products validamycin 3% SL at 625 ml/ha and Tricyclazole at 750 g/ha on rice plants. The results show that the composition illustrating the invention ("BPA 056") at 4000 ml/ha provided excellent rice yield as compared to untreated rice plants, and was also superior to validamycin 3% SL at 625 ml/ha and Tricyclazole at 750 g/ha. The composition illustrating the invention ("BPA 056") at 2000 and 3000 ml/ha still showed high rice yield as compared to untreated rice plants.

Table 16: Yield of rice plants after application of a composition comprising choline pelargonate ("BPA056") according to embodiments of the invention and comparative compositions at location L1 (n= 40)*

| No. | Treatment | Rate | Yield (kg/plot) | Yield (kg/rai) | Yield (kg/ha) |
|---|---|---|---|---|---|
| 1 | BPA 056 | 2000 ml/ha | 5.58 | 991.11 | 6194.44 |
| 2 | BPA 056 | 3000 ml/ha | 5.55 | 986.67 | 6166.67 |
| 3 | BPA 056 | 4000 ml/ha | 5.83 | 1035.56 | 6472.22 |
| 4 | Validamycin 3% SL | 625 ml/ha | 5.53 | 982.22 | 6138.89 |
| 5 | Tricyclazole | 750 g/ha | 5.28 | 937.78 | 5861.11 |
| 6 | Untreated | - | 5.03 | 893.33 | 5583.33 |

\* yield: average value of yield from 4 replications and 10 samplings per replication

Table 17 illustrates the yield at location L2 after application of a composition illustrating the invention ("BPA 056") at 2000 ml/ha, 3000 ml/ha and 4000 ml/ha, and commercially available reference products, validamycin 3% SL at 625 ml/ha and Tricyclazole at 750 g/ha on rice plants. The results demonstrate that the composition illustrating the invention ("BPA 056") at 3000 and 4000 ml/ha provided excellent rice yield as compared to untreated rice plants, and was superior to validamycin 3% SL at 625 ml/ha and Tricyclazole at 750 g/ha. The composition illustrating the invention ("BPA 056") at 2000 ml/ha still showed high rice yield as compared to untreated rice plants.

Table 17: Yield of rice plants after application of a composition comprising choline pelargonate ("BPA056") according to embodiments of the invention and comparative compositions at location L2 (n= 40)*

| No. | Treatment | Rate | Yield (kg/plot) | Yield (kg/rai) | Yield (kg/ha) |
|---|---|---|---|---|---|
| 1 | BPA 056 | 2000 ml/ha | 5.88 | 1044.44 | 6527.78 ab ** |
| 2 | BPA 056 | 3000 ml/ha | 6.23 | 1106.67 | 6916.67 a |

(continued)

| No. | Treatment | Rate | Yield (kg/plot) | Yield (kg/rai) | Yield (kg/ha) |
|-----|-----------|------|-----------------|----------------|---------------|
| 3 | BPA 056 | 4000 ml/ha | 6.35 | 1128.89 | 7055.56 a |
| 4 | Validamycin 3% SL | 625 ml/ha | 6.05 | 1075.56 | 6722.22 ab |
| 5 | Tricyclazole | 750 g/ha | 5.98 | 1062.22 | 6638.89 ab |
| 6 | Untreated | - | 5.20 | 924.44 | 5777.78 b |
| | | | | CV(%) | 9.90 |

* yield: average value of yield from 4 replications and 10 samplings per replication
** the values in the same column which are marked with the same letter show no significant difference according to standard parametric statistical test

**Claims**

1. A method for increasing the rice yield of a rice plant relative to the rice yield of an untreated rice plant, the method comprising applying choline pelargonate or a composition comprising choline pelargonate to the rice plant, part thereof, or locus of growth of the rice plant, wherein the application of choline pelargonate or the composition to the rice plant, part thereof, or locus of growth of the rice plant is performed after the manifestation of symptoms of blast disease, sheath blight, or combination thereof on the rice plant or part thereof.

2. The method according to claim 1, wherein the rice plant is selected from the group consisting of *Oryza sativa, Oryza glaberrima, Oryza australiensis, Oryza barthii, Oryza brachyantha, Oryza coarctata, Oryza eichingeri, Oryza grandiglumis, Oryza latifolia, Oryza longiglumis, Oryza longistaminata, Oryza meyeriana, Oryza minuta, Oryza neocaledonica, Oryza officinalis, Oryza punctata, Oryza ridleyi, Oryza rufipogon, Oryza schlechteri, Zizania palustris, Zizania aquatica, Zizania texana, Zizania latifolia,* and *Porteresia coarctata;* preferably wherein the rice plant is *Oryza sativa;* more preferably wherein the rice plant is *Oryza sativa indica* or *Oryza sativa japonica.*

3. The method according to claim 1 or 2, wherein the composition:

   - is an aqueous composition;
   - is a sprayable liquid or a concentrate;
   - comprises between 0.001% (w/v) and 70% (w/v) of choline pelargonate;
   - is a concentrate comprising between 5.0% (w/v) and 70% (w/v) of choline pelargonate, preferably between 10% (w/v) and 60% (w/v) of choline pelargonate;
   - is a sprayable liquid comprising between 0.001% (w/v) and 5.0% (w/v) of choline pelargonate, preferably between 0.1% (w/v) and 2.0% (w/v) of choline pelargonate, more preferably between 0.1% (w/v) and 1.0% (w/v) of choline pelargonate; and/or
   - further comprises one or more auxiliaries such as a solvent, a carrier, a surfactant, a sticker, an antifreeze agent, a thickener, a buffering agent, an antifoaming agent, an antioxidant, a preservative, an aroma, or a colorant.

4. The method according to any one of claims 1 to 3, wherein the method comprises applying choline pelargonate or the composition to the whole of the above-ground part of the rice plant.

5. The method according to any one of claims 1 to 4, wherein the application of choline pelargonate or the composition to the rice plant, part thereof, or locus of growth of the rice plant is performed on the same day after the manifestation of symptoms of blast disease, sheath blight, or combination thereof on the rice plant or part thereof.

6. The method according to any one of claims 1 to 5, wherein the first application of choline pelargonate or the composition as taught herein to the rice plant, part thereof, or locus of growth of the rice plant is performed after the manifestation of symptoms of blast disease, sheath blight, or combination thereof on the rice plant or part thereof, and before the intensity of the symptoms of the blast disease, sheath blight, or combination thereof is at most 25%, such as at most 20%, at most 15%, at most 10%, or at most 5%.

7. The method according to any one of claims 1 to 6, wherein choline pelargonate is applied in a concentration of 0.01 kg/ha to 10.0 kg/ha to the rice plant, part thereof, or locus of growth of the rice plant; preferably wherein choline pelargonate is applied in a concentration of 1.0 kg/ha to 3.0 kg/ha to the rice plant, part thereof, or locus of growth of the rice plant; and/or wherein choline pelargonate or the composition is sprayed on the rice plant, part thereof, or locus of growth of the rice plant.

8. Use of choline pelargonate or a composition comprising choline pelargonate for increasing the rice yield of a rice plant relative to the rice yield of an untreated rice plant, wherein choline pelargonate or the composition is applied to the rice plant, part thereof, or locus of growth of the rice plant after the manifestation of symptoms of blast disease, sheath blight, or combination thereof on the rice plant or part thereof.

9. A method for preventing or controlling blast disease, sheath blight, or a combination thereof on a rice plant or a part thereof, the method comprising applying choline pelargonate or a composition comprising choline pelargonate to the rice plant, part thereof, or locus of growth of the rice plant, wherein the application of choline pelargonate or the composition to the rice plant, part thereof, or locus of growth of the rice plant is performed after the manifestation of symptoms of the blast disease, sheath blight, or combination thereof on the rice plant or part thereof.

10. The method according to claim 9, wherein the rice plant is selected from the group consisting of *Oryza sativa, Oryza glaberrima, Oryza australiensis, Oryza barthii, Oryza brachyantha, Oryza coarctata, Oryza eichingeri, Oryza grandiglumis, Oryza latifolia, Oryza longiglumis, Oryza longistaminata, Oryza meyeriana, Oryza minuta, Oryza neocaledonica, Oryza officinalis, Oryza punctata, Oryza ridleyi, Oryza rufipogon, Oryza schlechteri, Zizania palustris, Zizania aquatica, Zizania texana, Zizania latifolia,* and *Porteresia coarctata;* preferably wherein the rice plant is *Oryza sativa;* more preferably wherein the rice plant is *Oryza sativa indica* or *Oryza sativa japonica.*

11. The method according to claim 9 or 10, wherein the composition:

- is an aqueous composition;
- is a sprayable liquid or a concentrate;
- comprises between 0.001% (w/v) and 70% (w/v) of choline pelargonate;
- is a concentrate comprising between 5.0% (w/v) and 70% (w/v) of choline pelargonate, preferably between 10% (w/v) and 60% (w/v) of choline pelargonate;
- is a sprayable liquid comprising between 0.001% (w/v) and 5.0% (w/v) of choline pelargonate, preferably between 0.1% (w/v) and 2.0% (w/v) of choline pelargonate, more preferably between 0.1% (w/v) and 1.0% (w/v) of choline pelargonate; and/or
- further comprises one or more auxiliaries such as a solvent, a carrier, a surfactant, a sticker, an antifreeze agent, a thickener, a buffering agent, an antifoaming agent, an antioxidant, a preservative, an aroma, or a colorant.

12. The method according to any one of claims 9 to 11, wherein the method comprises applying choline pelargonate or the composition to the whole of the above-ground part of the rice plant.

13. The method according to any one of claims 9 to 12, wherein the application of choline pelargonate or the composition to the rice plant, part thereof, or locus of growth of the rice plant is performed on the same day after the manifestation of symptoms of blast disease, sheath blight, or combination thereof on the rice plant or part thereof.

14. The method according to any one of claims 9 to 13, wherein the first application of choline pelargonate or the composition as taught herein to the rice plant, part thereof, or locus of growth of the rice plant is performed after the manifestation of symptoms of the blast disease, sheath blight, or combination thereof on the rice plant or part thereof, and before the intensity of the symptoms of the blast disease, sheath blight, or combination thereof is at most 25%, such as at most 20%, at most 15%, at most 10%, or at most 5%.

15. The method according to any one of claims 9 to 14, wherein choline pelargonate is applied in a concentration of 0.01 kg/ha to 10.0 kg/ha to the rice plant, part thereof, or locus of growth of the rice plant; preferably wherein choline pelargonate is applied in a concentration of 1.0 kg/ha to 3.0 kg/ha to the rice plant, part thereof, or locus of growth of the rice plant; and/or wherein choline pelargonate or the composition is sprayed on the rice plant, part thereof, or locus of growth of the rice plant.

16. Use of choline pelargonate or a composition comprising choline pelargonate in the control of blast disease, sheath blight, or combination thereof on a rice plant or part thereof, wherein choline pelargonate or the composition is applied to the rice plant, part thereof, or locus of growth of the rice plant after the manifestation of symptoms of the blast disease, sheath blight, or combination thereof on the rice plant or part thereof.

**Patentansprüche**

1. Verfahren zum Erhöhen des Reisertrags einer Reispflanze im Vergleich zum Reisertrag einer unbehandelten Reispflanze, wobei das Verfahren das Ausbringen von Cholinpelargonat oder einer Cholinpelargonat umfassenden Zusammensetzung auf die Reispflanze, einen Teil davon oder einen Ort des Wachstums der Reispflanze umfasst, wobei das Ausbringen von Cholinpelargonat oder der Zusammensetzung auf die Reispflanze, einen Teil davon, oder der Wachstumsort der Reispflanze nach dem Auftreten von Symptomen von Reisbrand, Blattscheidenfäule oder einer Kombination davon auf der Reispflanze oder einem Teil davon erfolgt.

2. Verfahren nach Anspruch 1, wobei die Reispflanze aus der aus Oryza sativa, Oryza glaberrima, Oryza australiensis, Oryza barthii, Oryza brachyantha, Oryza groctata, Oryza eichingeri, Oryza grandiglumis, Oryza latifolia, Oryza longiglumis, Oryza longistaminata, Oryza meyeriana, Oryza minuta, Oryza neocaledonica, Oryza officinalis, Oryza punctata, Oryza ridleyi, Oryza rufipogon, Oryza schlechteri, Zizania palustris, Zizania aquatica, Zizania texana, Zizania latifolia und Porteresia coarctata bestehenden Gruppe ausgewählt ist; wobei die Reispflanze vorzugsweise Oryza sativa ist; wobei die Reispflanze besonders bevorzugt Oryza sativa indica oder Oryza sativa japonica ist.

3. Verfahren nach Anspruch 1 oder 2, wobei die Zusammensetzung:

   - eine wässrige Zusammensetzung ist;
   - eine sprühbare Flüssigkeit oder ein Konzentrat ist;
   - zwischen 0,001 % (w/v) und 70 % (w/v) Cholinpelargonat umfasst;
   - ein Konzentrat ist, das zwischen 5,0 % (w/v) und 70 % (w/v) Cholinpelargonat, vorzugsweise zwischen 10 % (w/v) und 60 % (w/v) Cholinpelargonat umfasst;
   - eine sprühbare Flüssigkeit ist, die zwischen 0,001 % (w/v) und 5,0 % (w/v) Cholinpelargonat, vorzugsweise zwischen 0,1 % (w/v) und 2,0 % (w/v) Cholinpelargonat, besonders bevorzugt zwischen 0,1 % (w/v) und 1,0 % (w/v) Cholinpelargonat umfasst; und/oder
   - weiterhin ein oder mehrere Hilfsstoffe wie ein Lösungsmittel, einen Träger, ein Tensid, ein Haftmittel, ein Frostschutzmittel, ein Verdickungsmittel, einen Puffer, einen Entschäumer, ein Antioxidationsmittel, einen Konservierungsstoff, ein Aroma oder einen Farbstoff umfasst.

4. Verfahren nach einem der Ansprüche 1 bis 3, wobei das Verfahren das Ausbringen von Cholinpelargonat oder der Zusammensetzung auf den gesamten oberirdischen Teil der Reispflanze umfasst.

5. Verfahren nach einem der Ansprüche 1 bis 4, wobei das Ausbringen von Cholinpelargonat oder der Zusammensetzung auf die Reispflanze, einen Teil davon oder einen Wachstumsort der Reispflanze am selben Tag nach dem Auftreten von Symptomen von Reisbrand, Blattscheidenfäule oder einer Kombination davon auf die Reispflanze oder einen Teil davon erfolgt.

6. Verfahren nach einem der Ansprüche 1 bis 5, wobei die erste Anwendung von Cholinpelargonat oder der Zusammensetzung, wie hier gelehrt, auf die Reispflanze, einen Teil davon oder den Wachstumsort der Reispflanze nach dem Auftreten von Symptomen von Reisbrand, Blattscheidenfäule oder einer Kombination davon auf die Reispflanze oder einen Teil davon und bevor die Intensität der Symptome der des Reisbrands, der Blattscheidenfäule oder einer Kombination davon höchstens 25 %, wie höchstens 20 %, höchstens 15 %, höchstens 10 % oder höchstens 5 % beträgt.

7. Verfahren nach einem der Ansprüche 1 bis 6, wobei Cholinpelargonat in einer Konzentration von 0,01 kg/ha bis 10,0 kg/ha auf die Reispflanze, einen Teil davon oder einen Wachstumsort der Reispflanze ausgebracht wird; wobei Cholinpelargonat bevorzugt in einer Konzentration von 1,0 kg/ha bis 3,0 kg/ha auf die Reispflanze, einen Teil davon oder einen Wachstumsort der Reispflanze ausgebracht wird; und/oder wobei Cholinpelargonat oder die Zusammensetzung auf die Reispflanze, einen Teil davon oder einen Wachstumsort der Reispflanze gesprüht wird.

8. Verwendung von Cholinpelargonat oder einer Cholinpelargonat umfassenden Zusammensetzung zur Erhöhung des Reisertrags einer Reispflanze im Vergleich zum Reisertrag einer unbehandelten Reispflanze, wobei Cholinpelargonat oder die Zusammensetzung auf die Reispflanze, einen Teil davon oder einen Wachstumsort der Reispflanze nach dem Auftreten von Symptomen des Reisbrands, der Blattscheidenfäule oder einer Kombination davon auf der Reispflanze oder einem Teil davon ausgebracht wird.

9. Verfahren zum Verhindern oder Bekämpfen von Reisbrand, Blattscheidenfäule oder einer Kombination davon auf einer Reispflanze oder einem Teil davon, wobei das Verfahren das Ausbringen von Cholinpelargonat oder einer Cholinpelargonat umfassenden Zusammensetzung auf die Reispflanze, einen Teil davon oder einen Ort des Wachstums der Reispflanze umfasst, wobei das Ausbringen von Cholinpelargonat oder der Zusammensetzung auf die Reispflanze, einen Teil davon, oder der Wachstumsort der Reispflanze nach dem Auftreten von Symptomen des Reisbrands, der Blattscheidenfäule oder einer Kombination davon auf der Reispflanze oder einem Teil davon erfolgt.

10. Verfahren nach Anspruch 9, wobei die Reispflanze aus der aus Oryza sativa, Oryza glaberrima, Oryza australiensis, Oryza barthii, Oryza brachyantha, Oryza groctata, Oryza eichingeri, Oryza grandiglumis, Oryza latifolia, Oryza longiglumis, Oryza longistaminata, Oryza meyeriana, Oryza minuta, Oryza neocaledonica, Oryza officinalis, Oryza punctata, Oryza ridleyi, Oryza rufipogon, Oryza schlechteri, Zizania palustris, Zizania aquatica, Zizania texana, Zizania latifolia und Porteresia coarctata bestehenden Gruppe ausgewählt ist; wobei die Reispflanze vorzugsweise Oryza sativa ist; wobei die Reispflanze besonders bevorzugt Oryza sativa indica oder Oryza sativa japonica ist.

11. Verfahren nach Anspruch 9 oder 10, wobei die Zusammensetzung:

- eine wässrige Zusammensetzung ist;
- eine sprühbare Flüssigkeit oder ein Konzentrat ist;
- zwischen 0,001 % (w/v) und 70 % (w/v) Cholinpelargonat umfasst;
- ein Konzentrat ist, das zwischen 5,0 % (w/v) und 70 % (w/v) Cholinpelargonat, vorzugsweise zwischen 10 % (w/v) und 60 % (w/v) Cholinpelargonat umfasst;
- eine sprühbare Flüssigkeit ist, die zwischen 0,001 % (w/v) und 5,0 % (w/v) Cholinpelargonat, vorzugsweise zwischen 0,1 % (w/v) und 2,0 % (w/v) Cholinpelargonat, besonders bevorzugt zwischen 0,1 % (w/v) und 1,0 % (w/v) Cholinpelargonat umfasst; und/oder
- weiterhin ein oder mehrere Hilfsstoffe wie ein Lösungsmittel, einen Träger, ein Tensid, ein Haftmittel, ein Frostschutzmittel, ein Verdickungsmittel, einen Puffer, einen Entschäumer, ein Antioxidationsmittel, einen Konservierungsstoff, ein Aroma oder einen Farbstoff umfasst.

12. Verfahren nach einem der Ansprüche 9 bis 11, wobei das Verfahren das Ausbringen von Cholinpelargonat oder der Zusammensetzung auf den gesamten oberirdischen Teil der Reispflanze umfasst.

13. Verfahren nach einem der Ansprüche 9 bis 12, wobei das Ausbringen von Cholinpelargonat oder der Zusammensetzung auf die Reispflanze, einen Teil davon oder einen Wachstumsort der Reispflanze am selben Tag nach dem Auftreten von Symptomen von Reisbrand, Blattscheidenfäule oder einer Kombination davon auf die Reispflanze oder einen Teil davon erfolgt.

14. Verfahren nach einem der Ansprüche 9 bis 13, wobei die erste Anwendung von Cholinpelargonat oder der Zusammensetzung, wie hier gelehrt, auf die Reispflanze, einen Teil davon oder den Wachstumsort der Reispflanze nach dem Auftreten von Symptomen von Reisbrand, Blattscheidenfäule oder einer Kombination davon auf die Reispflanze oder einen Teil davon und bevor die Intensität der Symptome des Reisbrands, der Blattscheidenfäule oder einer Kombination davon höchstens 25 %, wie höchstens 20 %, höchstens 15 %, höchstens 10 % oder höchstens 5 % beträgt.

15. Verfahren nach einem der Ansprüche 9 bis 14, wobei Cholinpelargonat in einer Konzentration von 0,01 kg/ha bis 10,0 kg/ha auf die Reispflanze, einen Teil davon oder einen Wachstumsort der Reispflanze ausgebracht wird; wobei Cholinpelargonat bevorzugt in einer Konzentration von 1,0 kg/ha bis 3,0 kg/ha auf die Reispflanze, einen Teil davon oder einen Wachstumsort der Reispflanze ausgebracht wird; und/oder wobei Cholinpelargonat oder die Zusammensetzung auf die Reispflanze, einen Teil davon oder einen Wachstumsort der Reispflanze gesprüht wird.

16. Verwendung von Cholinpelargonat oder einer Cholinpelargonat umfassenden Zusammensetzung bei der Bekämpfung von Reisbrand, Blattscheidenfäule oder einer Kombination davon auf einer Reispflanze oder einem Teil davon, wobei Cholinpelargonat oder die Zusammensetzung auf die Reispflanze, einen Teil davon oder einen Wachstumsort der Reispflanze nach dem Auftreten von Symptomen des Reisbrands, der Blattscheidenfäule oder einer Kombination davon auf der Reispflanze oder einem Teil davon ausgebracht wird.

**Revendications**

1. Procédé pour augmenter le rendement en riz d'un plant de riz par rapport au rendement en riz d'un plant de riz non traité, le procédé comprenant l'application de pélargonate de choline ou d'une composition comprenant du pélargonate de choline sur le plant de riz, une partie de celui-ci, ou le lieu de croissance du plant de riz, dans lequel l'application de pélargonate de choline ou de la composition sur le plant de riz, une partie de celui-ci, ou le lieu de croissance du plant de riz est réalisée après la manifestation de symptômes de la pyriculariose, de la pourriture de la gaine, ou d'une combinaison de ceux-ci sur le plant de riz ou une partie de celui-ci.

2. Procédé selon la revendication 1, dans lequel le plant de riz est choisi dans le groupe constitué par Oryza sativa, Oryza glaberrima, Oryza australiensis, Oryza barthii, Oryza brachyantha, Oryza coarctata, Oryza eichingeri, Oryza grandiglumis, Oryza latifolia, Oryza longiglumis, Oryza longistaminata, Oryza meyeriana, Oryza minuta, Oryza neocaledonica, Oryza officinalis, Oryza punctata, Oryza ridleyi, Oryza rufipogon, Oryza schlechteri, Zizania palustris, Zizania aquatica, Zizania texana, Zizania latifolia, et Porteresia coarctata ; de préférence, dans lequel le plant de riz est Oryza sativa ; plus préférablement dans lequel le plant de riz est Oryza sativa indica ou Oryza sativa japonica.

3. Procédé selon la revendication 1 ou 2, dans lequel la composition :

   - est une composition aqueuse ;
   - est un liquide pulvérisable ou un concentré ;
   - comprend entre 0,001 % (p/v) et 70 % (p/v) de pélargonate de choline ;
   - est un concentré comprenant entre 5,0 % (p/v) et 70 % (p/v) de pélargonate de choline, de préférence entre 10 % (p/v) et 60 % (p/v) de pélargonate de choline ;
   - est un liquide pulvérisable comprenant entre 0,001 % (p/v) et 5,0 % (p/v) de pélargonate de choline, de préférence entre 0,1 % (p/v) et 2,0 % (p/v) de pélargonate de choline, plus préférablement entre 0,1 % (p/v) et 1,0 % (p/v) de pélargonate de choline ; et/ou
   - comprend en outre un ou plusieurs auxiliaires tels qu'un solvant, un support, un tensioactif, un adhésif, un agent antigel, un épaississant, un agent tampon, un agent antimousse, un antioxydant, un conservateur, un arôme, ou une matière colorante.

4. Procédé selon l'une quelconque des revendications 1 à 3, dans lequel le procédé comprend l'application de pélargonate de choline ou de la composition sur la totalité de la partie hors sol du plant de riz.

5. Procédé selon l'une quelconque des revendications 1 à 4, dans lequel l'application de pélargonate de choline ou de la composition sur le plant de riz, une partie de celui-ci, ou le lieu de croissance du plant de riz est effectuée le même jour après la manifestation des symptômes de la pyriculariose, de la pourriture de la gaine, ou une combinaison de ceux-ci sur le plant de riz ou une partie de celui-ci.

6. Procédé selon l'une quelconque des revendications 1 à 5, dans lequel la première application de pélargonate de choline ou de la composition telle que décrite ici sur le plant de riz, une partie de celui-ci ou le lieu de croissance du plant de riz est effectuée après la manifestation de symptômes de de la pyriculariose, de la pourriture de la gaine, ou une combinaison de ceux-ci sur le plant de riz ou une partie de celui-ci, et avant que l'intensité des symptômes de la pyriculariose, de la pourriture de la gaine ou d'une combinaison de ceux-ci ne soit d'au plus 25 %, tel que d'au plus 20 %, au plus 15 %, au plus 10 % ou au plus 5 %.

7. Procédé selon l'une quelconque des revendications 1 à 6, dans lequel le pélargonate de choline est appliqué à une concentration de 0,01 kg/ha à 10,0 kg/ha sur le plant de riz, une partie de celui-ci ou le lieu de croissance du plant de riz ; de préférence dans lequel le pélargonate de choline est appliqué à une concentration de 1,0 kg/ha à 3,0 kg/ha sur le plant de riz, une partie de celui-ci ou le lieu de croissance du plant de riz ; et/ou dans lequel le pélargonate de choline ou la composition est pulvérisé(e) sur le plant de riz, une partie de celui-ci ou le lieu de croissance du plant de riz.

8. Utilisation de pélargonate de choline ou d'une composition comprenant du pélargonate de choline pour augmenter le rendement en riz d'un plant de riz par rapport au rendement en riz d'un plant de riz non traité, dans laquelle le pélargonate de choline ou la composition est appliqué(e) sur le plant de riz, une partie de celui-ci, ou le lieu de croissance du plant de riz après la manifestation de symptômes de la pyriculariose, de la pourriture de la gaine, ou d'une combinaison de ceux-ci sur le plant de riz ou une partie de celui-ci.

9. Procédé de prévention ou de lutte contre la pyriculariose, la pourriture de la gaine ou une combinaison de ceux-ci sur un plant de riz ou une partie de celui-ci, le procédé comprenant l'application de pélargonate de choline ou d'une composition comprenant du pélargonate de choline sur le plant de riz, une partie de celui-ci ou le lieu de croissance du plant de riz, dans lequel l'application de pélargonate de choline ou de la composition sur le plant de riz, une partie de celui-ci ou le lieu de croissance du plant de riz est réalisée après la manifestation de symptômes de la pyriculariose, de la pourriture de la gaine, ou une combinaison de ceux-ci sur le plant de riz ou une partie de celui-ci.

10. Procédé selon la revendication 9, dans lequel le plant de riz est choisi dans le groupe constitué par Oryza sativa, Oryza glaberrima, Oryza australiensis, Oryza barthii, Oryza brachyantha, Oryza coarctata, Oryza eichingeri, Oryza grandiglumis, Oryza latifolia, Oryza longiglumis, Oryza longistaminata, Oryza meyeriana, Oryza minuta, Oryza neocaledonica, Oryza officinalis, Oryza punctata, Oryza ridleyi, Oryza rufipogon, Oryza schlechteri, Zizania palustris, Zizania aquatica, Zizania texana, Zizania latifolia, et Porteresia coarctata ; de préférence, dans lequel le plant de riz est Oryza sativa ; plus préférablement dans lequel le plant de riz est Oryza sativa indica ou Oryza sativa japonica.

11. Procédé selon la revendication 9 ou 10, dans lequel la composition :

- est une composition aqueuse ;
- est un liquide pulvérisable ou un concentré ;
- comprend entre 0,001 % (p/v) et 70 % (p/v) de pélargonate de choline ;
- est un concentré comprenant entre 5,0 % (p/v) et 70 % (p/v) de pélargonate de choline, de préférence entre 10 % (p/v) et 60 % (p/v) de pélargonate de choline ;
- est un liquide pulvérisable comprenant entre 0,001 % (p/v) et 5,0 % (p/v) de pélargonate de choline, de préférence entre 0,1 % (p/v) et 2,0 % (p/v) de pélargonate de choline, plus préférablement entre 0,1 % (p/v) et 1,0 % (p/v) de pélargonate de choline ; et/ou
- comprend en outre un ou plusieurs auxiliaires tels qu'un solvant, un support, un tensioactif, un adhésif, un agent antigel, un épaississant, un agent tampon, un agent antimousse, un antioxydant, un conservateur, un arôme, ou une matière colorante.

12. Procédé selon l'une quelconque des revendications 9 à 11, dans lequel le procédé comprend l'application de pélargonate de choline ou de la composition sur la totalité de la partie hors sol du plant de riz.

13. Procédé selon l'une quelconque des revendications 9 à 12, dans lequel l'application de pélargonate de choline ou de la composition sur le plant de riz, une partie de celui-ci, ou le lieu de croissance du plant de riz est effectuée le même jour après la manifestation des symptômes de la pyriculariose, de la pourriture de la gaine, ou une combinaison de ceux-ci sur le plant de riz ou une partie de celui-ci.

14. Procédé selon l'une quelconque des revendications 9 à 13, dans lequel la première application de pélargonate de choline ou de la composition telle que décrite ici sur le plant de riz, une partie de celui-ci ou le lieu de croissance du plant de riz est effectuée après la manifestation des symptômes de la pyriculariose, de la pourriture de la gaine ou une combinaison de ceux-ci sur le plant de riz ou une partie de celui-ci, et avant que l'intensité des symptômes de la pyriculariose, de la pourriture de la gaine ou d'une combinaison de ceux-ci ne soit d'au plus 25 %, tel que d'au plus 20 %, au plus 15 %, au plus 10 % ou au plus 5 %.

15. Procédé selon l'une quelconque des revendications 9 à 14, dans lequel le pélargonate de choline est appliqué à une concentration de 0,01 kg/ha à 10,0 kg/ha sur le plant de riz, une partie de celui-ci ou le lieu de croissance du plant de riz ; de préférence dans lequel le pélargonate de choline est appliqué à une concentration de 1,0 kg/ha à 3,0 kg/ha sur le plant de riz, une partie de celui-ci ou le lieu de croissance du plant de riz ; et/ou dans lequel le pélargonate de choline ou la composition est pulvérisé(e) sur le plant de riz, une partie de celui-ci ou le lieu de croissance du plant de riz.

16. Utilisation de pélargonate de choline ou d'une composition comprenant du pélargonate de choline dans la lutte contre la pyriculariose, de la pourriture de la gaine ou d'une combinaison de ceux-ci sur un plant de riz ou une partie de celui-ci, dans laquelle le pélargonate de choline ou la composition est appliqué(e) sur le plant de riz, une partie de celui-ci ou le lieu de croissance du plant de riz après la manifestation de symptômes de la pyriculariose, de la pourriture de la gaine ou d'une combinaison de ceux-ci sur le plant de riz ou une partie de celui-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020104645 A

- WO 03059063 A

**Non-patent literature cited in the description**

- **SUGANDA et al.** *Jurnal Agrikultura*, 2016, vol. 27 (3), 154-159

- **INAGAKI**. *Scl. Rep. Fac. Agric. Meljo Univ.*, 2001, vol. 37, 57-66